(19) Europäisches Patentamt / European Patent Office / Office européen des brevets

(11) **EP 4 659 935 A1**

(12) **EUROPEAN PATENT APPLICATION**

(43) Date of publication:
**10.12.2025 Bulletin 2025/50**

(21) Application number: **25174183.1**

(22) Date of filing: **05.05.2025**

(51) International Patent Classification (IPC):
*B29C 64/112* (2017.01)    *B22F 10/14* (2021.01)
*B29C 64/165* (2017.01)    *B29C 64/35* (2017.01)
*B29C 64/393* (2017.01)    *B33Y 10/00* (2015.01)
*B33Y 30/00* (2015.01)    *B33Y 50/02* (2015.01)
*B08B 3/04* (2006.01)    *B41J 2/165* (2006.01)
*B41J 2/175* (2006.01)

(52) Cooperative Patent Classification (CPC):
B29C 64/35; B08B 3/04; B22F 10/14;
B29C 64/112; B29C 64/165; B29C 64/393;
B33Y 10/00; B33Y 30/00; B33Y 40/00; B33Y 50/02;
B41J 2/16526; B41J 2/16538; B41J 2/16552;
B22F 12/90; B41J 2002/16558

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.05.2024 US 202418655550**

(71) Applicant: **General Electric Company
Cincinnati, Ohio 45215 (US)**

(72) Inventor: **BROMBERG, Vadim
Evendale, 45215 (US)**

(74) Representative: **Hafner & Kohl PartmbB
Schleiermacherstraße 25
90491 Nürnberg (DE)**

(54) **FLUID MANAGEMENT SYSTEM AND METHODS FOR ADDITIVE MANUFACTURING SYSTEMS**

(57)    The present disclosure relates to fluid management systems and methods of calibrating fluid circuits in the same. A fluid management system (900) includes a pump (808, 820) and at least one fluid circuit, the at least one fluid circuit including a plurality of fluid pathways, at least one flow-regulating valve (835, 845, 855, 865, 875, 905, 915, 925, 935, 945, 955), and at least one actuating valve. The pump (808, 820) is operable to provide a fluid to each of the plurality of fluid pathways, where the fluid has a flowrate within each of the plurality of fluid pathways. Each flow-regulating valve (835, 845, 855, 865, 875, 905, 915, 925, 935, 945, 955) may increase or decrease the resistance within each of the plurality of fluid pathways such that each flowrate of the plurality of fluid circuits is the same.

FIG. 7

EP 4 659 935 A1

## Description

Technical Field

The present specification generally relates to additive manufacturing systems and methods of using the same.

## BACKGROUND

Additive manufacturing systems often utilize fluids, such as cleaning fluid and binder material, to be circulated throughout an additive manufacturing machine. The additive manufacturing machine may then use the fluids while manufacturing a work product. In conventional additive manufacturing systems, the fluids may be pumped into the circuits with a plurality of pumps. Similarly, in conventional additive manufacturing systems, the spent and excess fluids are pumped out of the fluid pathways with additional pumps. Designing a plurality of pumps into additive manufacturing machines poses a challenge not only for space utilization and cost, but also for flow uniformity. For example, flow uniformity across a plurality of pathways may change over time, due to build-up of material near filters and/or due to viscosity changes in the fluid. Changes in these variables may lead to a decrease in the quality of the work product and a reduction in efficacy of the build process.

## BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

FIG. 1 schematically depicts components of an illustrative additive manufacturing apparatus according to one or more embodiments shown and described herein;

FIG. 2A schematically depicts an illustrative actuator assembly for an additive manufacturing apparatus according to one or more embodiments shown and described herein;

FIG. 2B schematically depicts a cross sectional view of the actuator assembly of FIG. 2A along lines 2B-2B;

FIG. 3 schematically depicts a block diagram of an illustrative control system for an additive manufacturing apparatus according to one or more embodiments shown and described herein;

FIG. 4 is a perspective top view of an illustrative cleaning station of an additive manufacturing apparatus according to one or more embodiments shown and described herein;

FIG. 5A is a side cross-sectional view of the cleaning station of FIG. 4;

FIG. 5B is an opposite side cross-sectional view of the cleaning station of FIG. 4;

FIG. 5C is a front cross-sectional view of the cleaning station of FIG. 4;

FIG. 6A is a schematic perspective view of an illustrative wet cleaning member comprising two blades in a wet wipe cleaning section of an additive manufacturing apparatus according to one or more embodiments shown and described herein;

FIG. 6B is a cross-sectional front view of a wet cleaning member of FIG. 6A according to one or more embodiments shown and described herein;

FIG. 6C is a schematic perspective view of an illustrative wet cleaning member comprising a single blade in a wet cleaning section of an additive manufacturing apparatus according to one or more embodiments shown and described herein;

FIG. 6D is a cross-sectional front view of a wet cleaning member of FIG. 6C according to one or more embodiments shown and described herein;

FIG. 6E is a cross-sectional side view of an illustrative blade-less wet cleaning member in a wet cleaning section of an additive manufacturing apparatus according to one or more embodiments shown and described herein;

FIG. 7 is a block diagram of elements of the binder material circuit and associated fluid pathways in the fluid management system according to one or more embodiments shown and described herein;

FIG. 8 is a block diagram of elements of the cleaning fluid circuit and associated fluid pathways in the fluid management system according to one or more embodiments shown and described herein;

FIG. 9 depicts a flowchart of an example method of operating an additive manufacturing system according to one or more embodiments shown and described herein;

FIG. 10A graphically depicts the flowrate of fluid within an additive manufacturing system; and

FIG. 10B graphically depicts the flowrate of fluid within an additive manufacturing system, according to one or more embodiments shown and described herein.

Additional features and advantages of the present disclosure will be set forth in the detailed description, which follows, and in part will be apparent to those skilled in the art from that description or recognized by practicing the embodiments described herein, including the detailed description, which follows the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments and are incorporated into and constitute a part of this specification. The drawings illustrate the various embodiments described herein, and together with the description, explain the principles and operations of the claimed subject matter.

## DETAILED DESCRIPTION

Disclosed herein are fluid management systems and methods of calibrating the same that mitigate the aforementioned problems. The presently disclosed embodiments utilize a single pump for a plurality of fluid pathways within a fluid circuit, thus enabling a space-saving design. Additionally, the utilization of one pump for a plurality of fluid pathways facilitates the calibration process to allow for the pressure of the pump to remain constant while adjusting the plurality of fluid pathways to achieve the same flowrate. In particular, it has been discovered that utilizing flow-regulating valves (e.g., needle valves) to adjust the cross-section of each of the plurality of fluid pathways allows for flowrate matching across a plurality of fluid pathways coupled to the same pump.

Reference will now be made in detail to various embodiments of devices, assemblies, and methods, examples of which are illustrated in the accompanying drawings. Whenever possible, the same reference numerals will be used throughout the drawings to refer to the same or like parts. Various embodiments of additive manufacturing systems and methods for using the same are described in further detail herein with specific reference to the appended drawings.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any device or assembly claim does not actually recite an order or orientation to individual components, or it is not otherwise specifically stated in the claims or description that the steps are to be limited to a specific order, or that a specific order or orientation to components of an device or assembly is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation; and the number or type of embodiments described in the specification.

As used herein, the singular forms "a," "an," and "the" include plural referents unless the context clearly dictates otherwise. Thus, for example, reference to "a" component includes aspects having two or more such components, unless the context clearly indicates otherwise.

For the purposes of describing and defining the present inventive technology it is noted that the term "substantially" is utilized herein to represent the inherent degree of uncertainty that may be attributed to any quantitative comparison, value, measurement, or other representation. The term "substantially" is also utilized herein to represent the degree by which a quantitative representation may vary from a stated reference without resulting in a change in the basic function of the subject matter at issue.

As used herein, the term "circuit" refers to the loop that the fluid (e.g., binder material or cleaning fluid) takes to and from a reservoir. As used herein, the term "pathway" refers to a section of a circuit that follows the route of a fluid to or from a reservoir. There may be multiple pathways a fluid may take in a circuit.

Additive manufacturing systems utilize fluids, such as cleaning fluid and binder material, that are circulated throughout an additive manufacturing machine. The additive manufacturing machine uses the fluids to manufacture a work product. A plurality of pumps are placed within the systems to pump these fluids into and out of the system. However, having a plurality of pumps can have downsides.

First, incorporating a plurality of pumps adds complexity to the system design. Coordinating the operation of a plurality of pumps, valves, and fluid pathways involves careful engineering to ensure proper fluid flow, timing, and synchronization. This complexity can lead to maintenance challenges. Additionally, having multiple pumps requires additional space within the additive manufacturing system. In environments where space is limited, this can be a significant constraint. A plurality of pumps also creates a plurality of points of potential failure.

The present disclosure is directed to a fluid management system that includes a binder material circuit and a cleaning fluid circuit. Each circuit includes a plurality of fluid pathways, where each pathway has at least one flow-regulating valve (e.g., a needle valve, PLC-controlled throttling valve, ). A single pump serves a single circuit, meaning that a single pump supports a plurality of pathways. The calibration of the pathways is modeled after the concept of impedance matching. The technique involves adjusting the resistance of interconnected fluid pathways with the flow-regulating valves to optimize the fluid flow and minimize the impact of changing fluid viscosity or particulate build up during run time. Said differently, the resistance is adjusted to create uniform flow across all fluid pathways while the single pump operates at a constant pressure, simplifying the fluid management process.

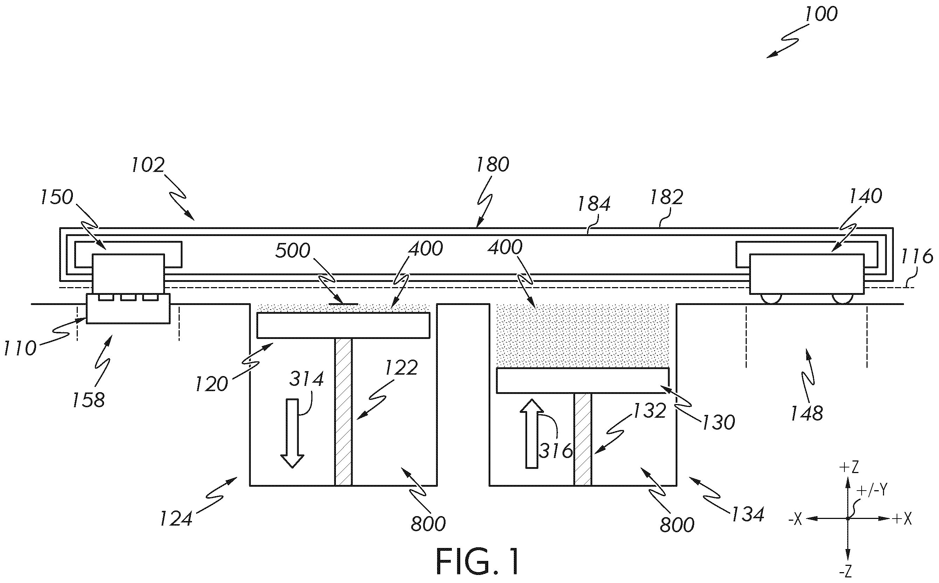

Referring now to FIG. 1, an embodiment of an additive manufacturing apparatus 100 is schematically depicted. The additive manufacturing apparatus 100 includes a cleaning station 110, a build platform 120, and an actuator assembly 102. The additive manufacturing apparatus 100 may optionally include a supply platform 130. The actuator assembly 102 includes, among other elements, a recoat head 140 for distributing build material 400 and a print head 150 for depositing binder material 500. In some embodiments, the recoat head 140 may further comprise an energy source for curing the binder material 500 as described in further detail herein. The actuator assembly 102 may be constructed to facilitate independent control of the recoat head 140 and the print head 150 along the working axis 116 of the additive manufacturing apparatus 100. This allows for the recoat head 140 and the print head 150 to traverse the working axis 116 of the additive manufacturing apparatus 100 in the same direction and/or in opposite directions and for the recoat head 140 and the print head 150 to traverse the working axis of the additive manufacturing apparatus 100 at different speeds and/or the same speed. Independent actuation and control of the recoat head 140 and the print head 150, in turn, allows for at least some steps of the additive manufacturing process to be performed simultaneously thereby reducing the overall cycle time of the additive manufacturing process to less than the sum of the cycle time for each individual step. In the embodiments of the additive manufacturing apparatus 100 described herein, the working axis 116 of the additive manufacturing apparatus 100 is parallel to the +/-X axis of the coordinate axes depicted in the figures. It should be understood that the components of the additive manufacturing apparatus 100 traversing the working axis 116, such as the recoat head 140, the print head 150, or the like, need not be centered on the working axis 116. However, in the embodiments described herein, at least two of the components of the additive manufacturing apparatus 100 are arranged with respect to the working axis 116 such that, as the components traverse the working axis, the components could occupy the same or an overlapping volume along the working axis if not properly controlled.

In the embodiment depicted in FIG. 1, the additive manufacturing apparatus 100 includes a cleaning station 110, a build platform 120, a supply platform 130 and an actuator assembly 102. However, it should be understood that, in other embodiments, the additive manufacturing apparatus 100 does not include a supply platform 130, such as in some embodiments where build material is supplied to the build platform 120 with, for example and without limitation, a build material hopper. In the embodiment depicted in FIG. 1 , the cleaning station 110, the build platform 120, and the supply platform 130 are positioned in series along the working axis 116 of the additive manufacturing apparatus 100 between a print home position 158 of the print head 150 located proximate an end of the working axis 116 in the -X direction, and a recoat home position 148 of the recoat head 140 located proximate an end of the working axis 116 in the +X direction. That is, the print home position 158 and the recoat home position 148 are spaced apart from one another in a horizontal direction that is parallel to the +/-X axis of the coordinate axes depicted in the figures and the cleaning station 110, the build platform 120, and the supply platform 130 are positioned therebetween. In the embodiments described herein, the build platform 120 is positioned between the cleaning station 110 and the supply platform 130 along the working axis 116 of the additive manufacturing apparatus 100.

The cleaning station 110 is positioned proximate one end of the working axis 116 of the additive manufacturing apparatus 100 and is co-located with the print home position 158 where the print head 150 is located or "parked" before and after depositing binder material 500 on a layer of build material 400 positioned on the build platform 120. The cleaning station 110 may include one or more cleaning sections (not shown) to facilitate cleaning the print head 150 between depositing operations. The cleaning sections may include, for example and without limitation, a soaking station containing a cleaning solution for dissolving excess binder material on the print head 150, a wiping station for removing excess cleaning fluid from the print head 150, a jetting station for reestablishing a meniscus within the nozzles of the print head 150, a park station for maintaining moisture in the nozzles of the print head 150, or various combinations thereof. The print head 150 may be transitioned between the cleaning sections by the actuator assembly 102.

The build platform 120 is coupled to a lift system 800 including a build platform actuator 122 to facilitate raising and lowering the build platform 120 relative to the working axis 116 of the additive manufacturing apparatus 100 in a vertical direction (e.g., a direction parallel to the +/-Z directions of the coordinate axes depicted in the figures). The build platform actuator 122 may be, for example and without limitation, a mechanical actuator, an electro-mechanical actuator, a pneumatic actuator, a hydraulic actuator, or any other actuator suitable for imparting linear motion to the build platform 120 in a vertical direction. Suitable actuators may include, without limitation, a worm drive actuator, a ball screw actuator, a pneumatic piston, a hydraulic piston, an electro-mechanical linear actuator, or the like. The build platform 120 and build platform actuator 122 are positioned in a build receptacle 124 located below the working axis 116 (e.g., in the -Z direction of the coordinate axes depicted in the figures) of the additive manufacturing apparatus 100. During operation of the additive manufacturing apparatus 100, the build platform 120 is retracted into the build receptacle 124 by action of the build platform actuator 122 after each layer of binder material 500 is deposited on the build material 400 located on build platform 120.

The supply platform 130 is coupled to a lift system 800 including a supply platform actuator 132 to facilitate raising and lowering the supply platform 130 relative to the working axis 116 of the additive manufacturing apparatus 100 in a vertical direction (e.g., a direction parallel to the +/-Z directions of the coordinate axes depicted in the figures). The supply platform actuator 132 may be, for example and without limitation, a mechanical actuator, an electro-mechanical actuator, a pneumatic actuator, a hydraulic actuator, or any other actuator suitable for imparting linear motion to the supply platform 130 in a vertical direction. Suitable actuators may include, without limitation, a worm drive actuator, a ball screw actuator, a pneumatic piston, a hydraulic piston, an electro-mechanical linear actuator, or the like. The supply platform 130 and supply platform actuator 132 are positioned in a supply receptacle 134 located below the working axis 116 (e.g., in the -Z direction of the coordinate axes depicted in the figures) of the additive manufacturing apparatus 100. During operation of the additive manufacturing apparatus 100, the supply platform 130 is raised relative to the supply receptacle 134 and towards the working axis 116 of the additive manufacturing apparatus 100 by action of the supply platform actuator 132 after a layer of build material 400 is distributed from the supply platform 130 to the build platform 120, as described in further detail herein.

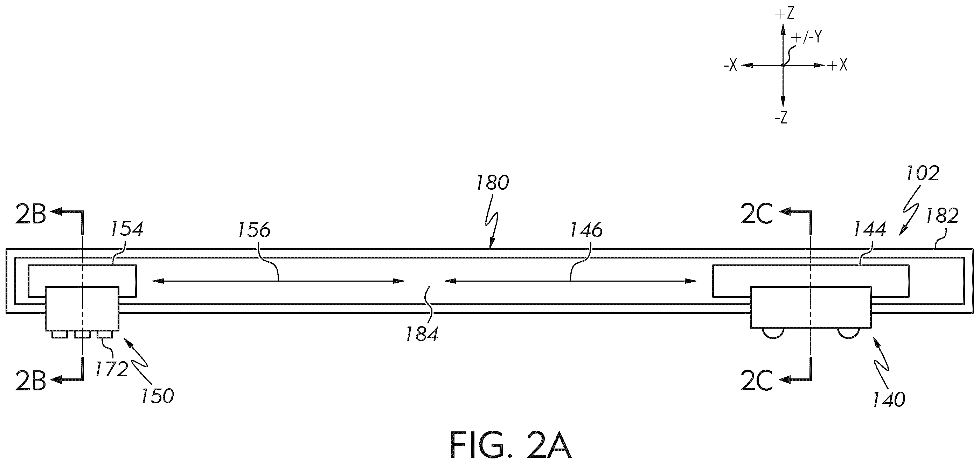

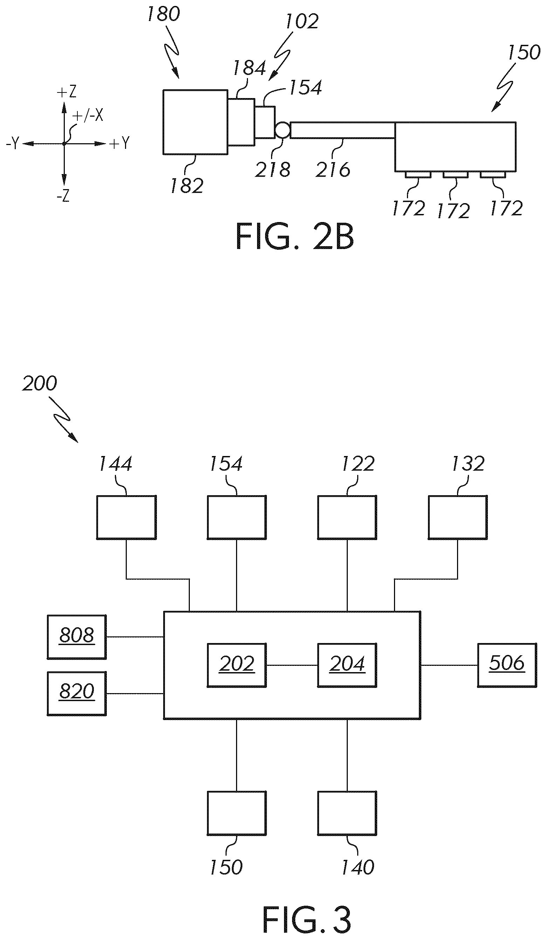

FIG. 2A schematically depicts the actuator assembly 102 of the additive manufacturing apparatus 100 of FIG. 1. The actuator assembly 102 generally includes the recoat head 140, the print head 150, a recoat head actuator 144, a print head actuator 154, and a support 182. In the embodiments described herein, the support 182 extends in a horizontal direction (e.g., a direction parallel to the +/-X direction of the coordinate axes depicted in the figures) parallel to the working axis 116 (FIG. 1) of the additive manufacturing apparatus 100. When the actuator assembly 102 is assembled over the cleaning station 110, the build platform 120, and the supply platform 130 as depicted in FIG. 1, the support 182 extends in a horizontal direction from at least the cleaning station 110 to beyond the supply platform 130.

In one embodiment, the support 182 is a side of a rail 180 that extends in a horizontal direction. For example, in one embodiment, the rail 180 may be rectangular or square in vertical cross section (e.g., a cross section in the Y-Z plane of the coordinate axes depicted in the figures) with a side surface of the rectangle or square forming the support 182. However, it should be understood that other embodiments are contemplated and possible. For example and without limitation, the rail 180 may have other cross sectional shapes, such as octagonal or the like, with the support 182 being one surface of facet of the rail 180. In some embodiments, the support 182 is positioned in a vertical plane (e.g., a plane parallel to the X-Z plane of the coordinate axes depicted in the figures). However, it should be understood that, in other embodiments, the support 182 is positioned in a plane other than a vertical plane.

In the embodiments described herein, the recoat head actuator 144 and the print head actuator 154 are coupled to the support 182.

In the embodiments described herein, the recoat head actuator 144 is bi-directionally actuable along a recoat motion axis 146 and the print head actuator 154 is bi-directionally actuable along a print motion axis 156. That is, the recoat motion axis 146 and the print motion axis 156 define the axes along which the recoat head actuator 144 and the print head actuator 154 are actuable, respectively. In some embodiments, the recoat head actuator 144 and the print head actuator 154 are bi-directionally actuable independent of one another. The recoat motion axis 146 and the print motion axis 156 extend in a horizontal direction and are parallel with the working axis 116 (FIG. 1) of the additive manufacturing apparatus 100. In the embodiments described herein, the recoat motion axis 146 and the print motion axis 156 are co-linear. With this configuration, the recoat head 140 and the print head 150 may occupy the same space (or portions of the same space) along the working axis 116 of the additive manufacturing apparatus 100 at different times because the recoat motion axis 146 and the print motion axis 156 lie along the same line. In the embodiment of the actuator assembly 102 depicted in FIGS. 2A-2B, the recoat motion axis 146 and the print motion axis 156 are located in the same vertical plane. In some embodiments where the support 182 is positioned in a vertical plane, the recoat motion axis 146 and the print motion axis 156 are located in a vertical plane that is parallel to the vertical plane of the support 182, as depicted in FIGS. 2A-2B.

However, it should be understood that other embodiments are contemplated and possible, such as embodiments in which the recoat motion axis 146 and the print motion axis 156 are located in a vertical plane that is non-parallel with the plane of the support 182.

In the embodiments described herein, the recoat head actuator 144 and the print head actuator 154 may be, for example and without limitation, mechanical actuators, electro-mechanical actuators, pneumatic actuators, hydraulic actuators, or any other actuator suitable for providing linear motion. Suitable actuators may include, without limitation, worm drive actuators, ball screw actuators, pneumatic pistons, hydraulic pistons, electro-mechanical linear actuators, or the like. In one particular embodiment, the recoat head actuator 144 and the print head actuator 154 are linear actuators manufactured by Aerotech® Inc. of Pittsburgh, Pa., such as the PRO225LM Mechanical Bearing, Linear Motor Stage.

For example, the actuator assembly 102 may comprise a guide 184 affixed to the support 182 of the rail 180. The recoat head actuator 144 and the print head actuator 154 may be moveably coupled to the rail 180 such that the recoat head actuator 144 and the print head actuator 154 can independently traverse a length of the guide 184. In some embodiments, the motive force traversing the recoat head actuator 144 and the print head actuator 154 is supplied by direct-drive linear motors, such as brushless servomotors, for example.

In some embodiments, the recoat head actuator 144, the print head actuator 154, and the guide 184 may be a cohesive sub-system that is affixed to the rail 180, such as when the recoat head actuator 144 and the print head actuator 154 are similar to the PRO225LM Mechanical Bearing, Linear Motor Stages, for example. However, it should be understood that other embodiments are contemplated and possible, such as embodiments where the recoat head actuator 144 and the print head actuator 154 comprise a plurality of components that are individually assembled onto the rail 180 to form the recoat head actuator 144 and the print head actuator 154, respectively.

Still referring to FIGS. 2A-2B, the print head 150 is coupled to the print head actuator 154 such that the print head 150 is situated proximate the working axis 116 (FIG. 1) of the additive manufacturing apparatus 100. Thus, bi-directional actuation of the print head actuator 154 along the print motion axis 156 affects bi-directional motion of the print head 150 on the working axis 116 of the additive manufacturing apparatus 100. In the embodiment of the actuator assembly 102 depicted in FIGS. 2A-2B, the print head 150 is coupled to the print head actuator 154 with strut 216 at pivot point 218 such that the print head 150 is cantilevered from the support 182 and positioned on the working axis 116 (FIG. 1) of the additive manufacturing apparatus 100. Cantilevering the print head 150 from the support 182 allows the print head actuator 154 and the guide 184 to be spaced apart from, for example, the build platform 120 of the additive manufacturing apparatus 100, thereby reducing the likelihood that the print head actuator 154, the guide 184, and associated electrical components are fouled or otherwise contaminated with build material 400. This increases the maintenance interval for the print head actuator, increases the service life of the print head actuator, reduces machine downtime, and reduces build errors due to fouling of the print head actuator 154. In addition, spacing the print head actuator 154 apart from the build platform 120 of the additive manufacturing apparatus 100 allows for improved visual and physical access to the build platform 120 and the supply platform 130, improving the ease of maintenance and allowing for better visual observation (from human observation, camera systems, or the like) of the additive manufacturing process. In some embodiments described herein, the print head 150 may be fixed in directions orthogonal to the recoat motion axis 146 and the working axis 116 (e.g., fixed along the +/-Z axis and/or fixed along the +/-Y axis).

As noted above, in the embodiments described herein the recoat head 140 and the print head 150 are both located on the working axis 116 of the additive manufacturing apparatus 100. As such, the movements of the recoat head 140 and the print head 150 on the working axis 116 occur along the same axis and are thus co-linear. With this configuration, the recoat head 140 and the print head 150 may occupy the same space (or portions of the same space) along the working axis 116 of the additive manufacturing apparatus 100 at different times during a single build cycle. The recoat head 140 and the print head 150 may be moved along the working axis 116 of the additive manufacturing apparatus 100 simultaneously in a coordinated fashion, in the same direction and/or in opposing directions, at the same speeds or different speeds. This, in turn, allows for individual steps of the additive manufacturing process, such as the distributing step (also referred to herein as the recoating step), the depositing step (also referred to herein as the printing step), the curing (or heating) step, and/or the cleaning step to be performed with overlapping cycle times. For example, the distributing step may be initiated while the cleaning step is being completed; the depositing step may be initiated while the distributing step in completed; and/or the cleaning step may be initiated while the distributing step is being completed. This may reduce the overall cycle time of the additive manufacturing apparatus 100 to less than the sum of the distributing cycle time (also referred to herein as the recoat cycle time), the depositing cycle time (also referred to herein as the print cycle time), and/or the cleaning cycle time.

Other embodiments of an actuator assembly (not shown) may be implemented in the embodiments of the additive manufacturing apparatuses 100 depicted in FIG. 1, for example, as an alternative to the actuator assembly 102. As such, it should be understood that other embodiments of the actuator assembly may be utilized to build an object on the build platform 120 in a similar manner as described herein with respect to FIGS. 1 and 2A-2B.

Referring now to FIGS. 1 and 2A-2B, in the embodiments described herein, the print head 150 may deposit the binder material 500 on a layer of build material 400 distributed on the build platform 120 through an array of nozzles 172 located on the underside of the print head 150 (e.g., the surface of the print head 150 facing the build platform 120). In some embodiments, the array of nozzles 172 are spatially distributed in the XY plane of the coordinate axes depicted in the figures. In some embodiments, the print heads may also define the geometry of the part being built. In some embodiments, the nozzles 172 may be piezoelectric print nozzles and, as such, the print head 150 is a piezo print head. In alternative embodiments, the nozzles 172 may be thermal print nozzles and, as such, the print head 150 is a thermal print head. In alternative embodiments, the nozzles 172 may be spray nozzles.

In addition to the nozzles 172, in some embodiments, the print head 150 may further comprise one or more sensors (not depicted) for detecting a property of the build material 400 distributed on the build platform 120 and/or the binder material 500 deposited on the build platform 120. Examples of sensors may include, without limitation, image sensors such as cameras, thermal detectors, pyrometers, profilometers, ultrasonic detectors, and the like. In these embodiments, signals from the sensors may be fed back to the control system (described in further detail herein) of the additive manufacturing apparatus to facilitate feedback control of one or more functions of the additive manufacturing apparatus.

Alternatively or additionally, the print head 150 may comprise at least one energy source (not depicted). The energy source may emit a wavelength or a range of wavelengths of electromagnetic radiation suitable for curing (or at least initiating curing) the binder material 500 deposited on the build material 400 distributed on the build platform 120. For example, the energy source may comprise an infrared heater or an ultraviolet lamp which emit wavelengths of infrared or ultraviolet electromagnetic radiation suitable for curing the binder material 500 previously deposited on the layer of build material 400 distributed on the build platform 120. In instances where the energy source is an infrared heater, the energy source may also preheat the build material 400 as it is distributed from the supply platform 130 to the build platform 120 that may assist in expediting the curing of subsequently deposited binder material 500.

FIG. 3 schematically depicts a control system 200 for controlling the additive manufacturing apparatus 100 of FIG. 1 with an actuator assembly as depicted in FIGS. 2A-2B. The control system 200 is communicatively coupled to the recoat head actuator 144, the print head actuator 154, the build platform actuator 122, and the supply platform actuator 132. The control system 200 may also be communicatively coupled to the print head 150 and the recoat head 140. In some embodiments where additional accessories or components are included, such as process accessories, process accessory actuators, and sensors (not depicted), the control system 200 may also be communicatively coupled to the additional components. In the embodiments described herein, the control system 200 includes a processor 202 communicatively coupled to a memory 204. The processor 202 may include any processing component(s), such as a central processing unit or the like, configured to receive and execute computer readable and executable instructions stored in, for example, the memory 204. In the embodiments described herein, the processor 202 of the control system 200 is configured to provide control signals to (and thereby actuate) the recoat head actuator 144, the print head actuator 154, the build platform actuator 122, the supply platform actuator 132, and any additional components (when included). The processor 202 may also be configured to provide control signals to (and thereby actuate) the print head 150 and the recoat head 140. The control system 200 may also be configured to receive signals from one or more sensors of the recoat head 140 and, based on these signals, actuate one or more of the recoat head actuator 144, the print head actuator 154, the build platform actuator 122, the supply platform actuator 132, the print head 150, and/or the recoat head 140.

In the embodiments described herein, the computer readable and executable instructions for controlling the additive manufacturing apparatus 100 are stored in the memory 204 of the control system 200. The memory 204 is a non-transitory computer readable memory. The memory 204 may be configured as, for example and without limitation, volatile and/or nonvolatile memory and, as such, may include random access memory (including SRAM, DRAM, and/or other types of random access memory), flash memory, registers, compact discs (CD), digital versatile discs (DVD), and/or other types of storage components.

The operation of the additive manufacturing apparatus 100 will now be described in further detail with specific reference to FIGS. 1, 2A-2B, and 3.

Referring to FIG. 1, the additive manufacturing apparatus 100 is schematically depicted at initiation of a build cycle. The phrase "build cycle," as used herein, refers to the process of building a single layer of an object on the build platform 120. In the embodiments described herein, the "build cycle" may include one iteration each of raising the supply platform 130, lowering the build platform 120, distributing a new layer of build material 400 from the supply platform 130 to the build platform 120, depositing binder material 500 on the new layer of build material 400 distributed on the build platform 120, and optionally the cleaning of the print head 150.

In describing the operation of the additive manufacturing apparatus 100, specific reference is made herein to the build material 400 and the binder material 500. The build material generally includes a powder material that is spreadable or flowable. Categories of suitable powder material include, without limitation, dry powder material and wet powder material (e.g., a powder material entrained in a slurry). In some embodiments, the build material may be capable of being bound together with the binder material. In some embodiments, the build material may also be capable of being fused together, such as by sintering. In some embodiments, the build material may be an inorganic powder material including, for example and without limitation, ceramic powders, metal powders, glass powders, carbon powder, sand, cement, calcium phosphate powder, and various combinations thereof. In some embodiments, the build material may comprise an organic powder material including, for example and without limitation, plastic powders, polymer powders, soap, powders formed from foodstuff (e.g., edible powders), and various combinations thereof. In some embodiments, the build material may be (or include) pharmaceutically active components, such as when the build material is or contains a pharmaceutical. In some embodiments, the build material may be a combination of inorganic powder material and organic powder material.

The build material may be uniform in size or non-uniform in size. In some embodiments, the build material may have a powder size distribution such as, for example and without limitation, a bi-modal or tri-modal powder size distribution. In some embodiments, the build material may be, or may include, nanoparticles.

The build material may be regularly or irregularly shaped, and may have different aspect ratios or the same aspect ratio. For example, the build material may take the form of small spheres or granules, or may be shaped like small rods or fibers.

In some embodiments, the build material can be coated with a second material. For example and without limitation, the build material may be coated with a wax, a polymer, or another material that aids in binding the build material together (in conjunction with the binder). Alternatively or additionally, the build material may be coated with a sintering agent and/or an alloying agent to promote fusing the build material.

The binder material may comprise a material which is radiant-energy curable and which is capable of adhering or binding together the build material when the binder material is in the cured state. The term "radiant-energy curable," as used herein, refers to any material that solidifies in response to the application of radiant energy of a particular wavelength and energy. For example, the binder material may comprise a known photopolymer resin containing photoinitiator compounds functioning to trigger a polymerization reaction, causing the resin to change from a liquid state to a solid state. Alternatively, the binder material may comprise a material that contains a solvent that may be evaporated out by the application of radiant energy. The uncured binder material may be provided in solid (e.g., granular) form, liquid form including a paste or slurry, or a low viscosity solution compatible with print heads. The binder material may be selected to have the ability to out-gas or burn off during further processing, such as during sintering of the build material. In some embodiments, the binder material may be as described in U.S. Patent Publication No. 2018/0071820 entitled "Reversible Binders For Use In Binder Jetting Additive Manufacturing Techniques" and assigned to General Electric Corporation, Schenectady, N.Y. However, it should be understood that other binder materials are contemplated and possible, including combinations of various binder materials.

Referring initially to FIG. 1 , at initiation of the build cycle, the control system 200 sends a control signal to the supply platform actuator 132 that actuates the supply platform actuator 132 in the upward vertical direction (e.g., in the +Z direction of the coordinate axes depicted in the figures) as indicated by arrow 316, thereby moving the supply platform 130, and the build material 400 positioned thereon, in the upward vertical direction towards the working axis 116 of the additive manufacturing apparatus 100. The supply platform 130 is moved in the upward vertical direction by an amount sufficient to position a predetermined amount of the build material 400 in the pathway of the recoat head 140 as it traverses over the working axis 116 of the additive manufacturing apparatus 100. While FIG. 1 schematically depicts an initiation of a build cycle in which binder material 500 is already present on a layer of build material 400 (such as on a previously distributed layer of build material 400), it should be understood that the initiation of the build cycle may occur without any build material 400 or binder material 500 disposed on the build platform 120.

While FIGS. 1 and 2A-2B schematically depict an embodiment of an actuator assembly 102, it should be understood that other embodiments are contemplated and possible, such as embodiments with different number of supports and/or actuators. In addition, it is contemplated that embodiments may include a plurality of supports, each having one of the recoat head actuator 144 and the print head actuator 154 mounted thereto.

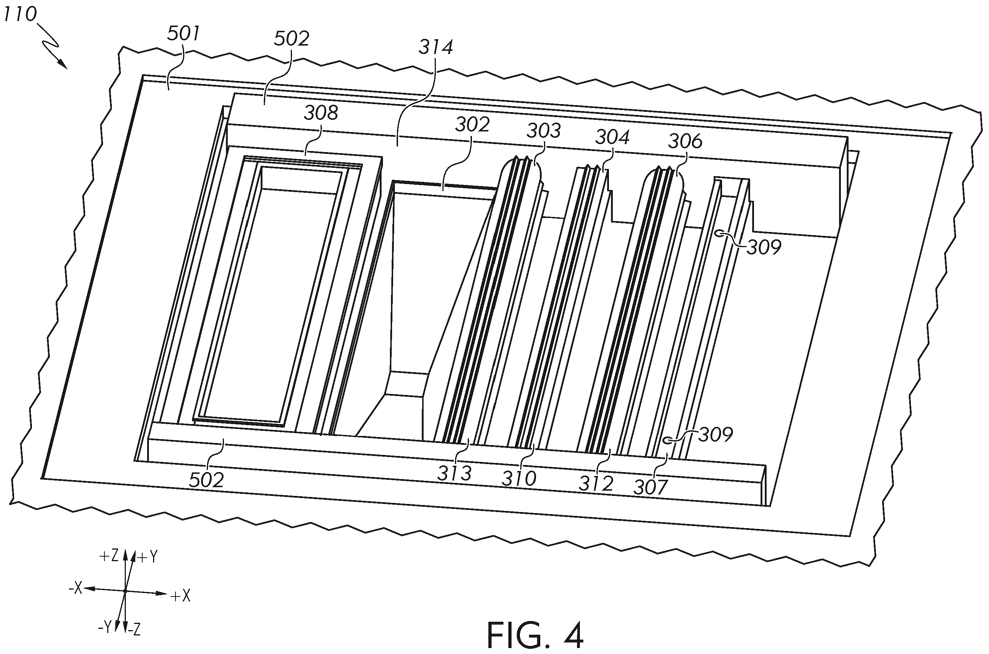

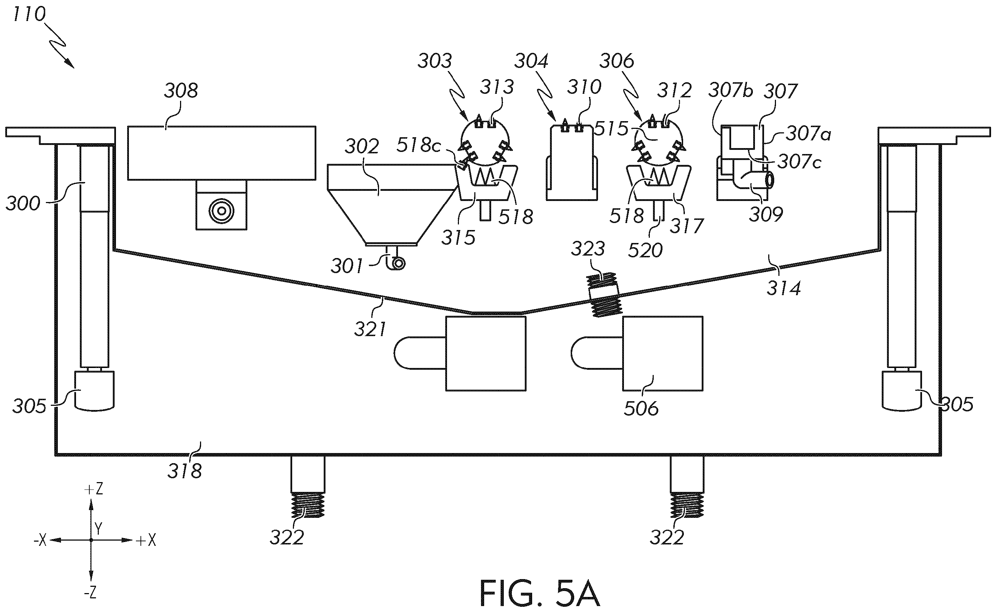

Turning now to FIGS. 4 and 5A-4C, an embodiment of the cleaning station 110 is shown in greater detail. Although described in various embodiments as being associated with the additive manufacturing apparatus 100 of FIGS. 1 and 2A-2B it is contemplated that the cleaning station 110 and fluid management system coupled thereto may be used with other types of additive manufacturing and printing apparatuses known and used in the art.

The cleaning station 110 may comprise a cleaning station vessel 314 positioned about a binder purge bin 302, a purge wiper section 303, a wet cleaner section 304, a dry wiper section 306, a spit capture tray 307, and a capping section 308. In various embodiments, the purge wiper section 303, the wet cleaner section 304, the dry wiper section 306, the spit capture tray 307, and the capping section 308 are positioned above the cleaning station vessel 314, each containing a volume of cleaning fluid. As described in greater detail, the cleaning station vessel 314 is configured to collect cleaning fluid overflowing from these sections and provide the collected cleaning fluid to a cleaning fluid receptacle.

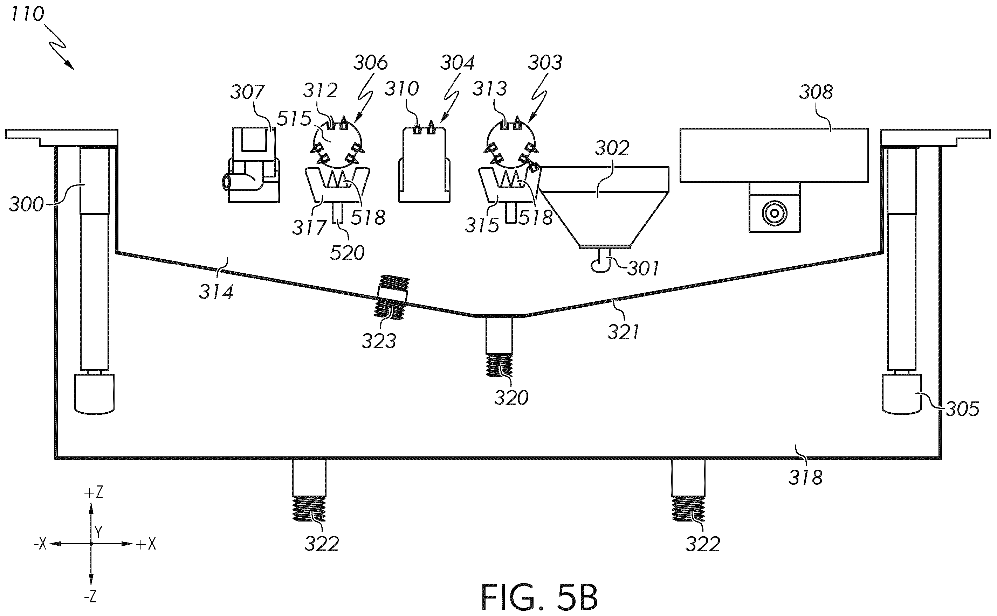

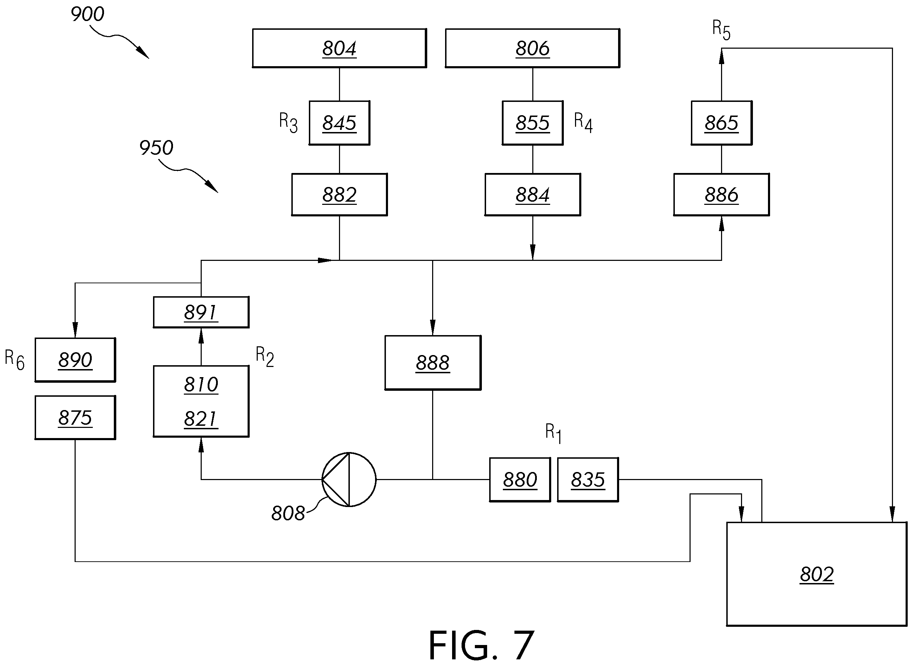

As shown in FIGS. 5A-5C, the cleaning station 110 includes a binder purge bin 302, which is configured to receive material, such as contaminants and binder material, discharged by the print head. In some embodiments, the cleaning station 110 additionally includes a purge wiper section 303 positioned between the binder purge bin 302 and the wet cleaner section 304. The purge wiper section 303 includes a purge wipe member 313 which contacts the print head after contaminants and binder material are discharged into the binder purge bin 302 to remove remaining contaminants and binder material from the face of the print head before the print head is introduced to the wet cleaner section 304. In some embodiments, the purge wipe member 313 redirects the loose contaminants and binder material into the binder purge bin 302 for disposal (as shown in FIGS. 5A and 5B), thereby reducing the amount of contaminants and binder material introduced into the cleaning station vessel 314 during the cleaning process. In some embodiments, the binder purge bin 302 includes a drain 301 through which the binder purge bin 302 is fluidly coupled to a binder reservoir 802(FIG. 7).

The purge wiper section 303 further includes a purge wipe reservoir 315. In some embodiments, the purge wipe reservoir 315 is positioned vertically below the purge wipe member 313 and maintains a volume of cleaning fluid through which the purge wipe member 313 is rotated for cleaning the purge wipe member 313. By maintaining a suitable volume of cleaning fluid located for contact with the purge wipe member 313, the purge wipe reservoir 315 may reduce a total amount of cleaning fluid utilized by the cleaning station 110, as compared to cleaning stations including a large tank of cleaning fluid for use by a plurality of cleaning components. In addition to the purge wipe reservoir 315 and the dry wipe reservoir 317, in some embodiments, the purge wiper section 303 and the dry wiper section 306 include at least one wiper blade cleaning member 518. When included, the wiper blade cleaning member 518 is configured to remove debris from the purge wiper section 303 and the dry wipe member 312 (which includes a dry wiper body 515) as the purge wipe member 313 and the dry wipe member 312 is rotated past the wiper blade cleaning member 518 and contacts the wiper blade cleaning member 518.

The wet cleaner section 304 applies cleaning fluid to the print head, specifically, a faceplate of the print head. In some embodiments, the wet cleaner section 304 includes a stationary wet cleaning member 310 (as shown in FIGS. 4, 5A, and 5B).

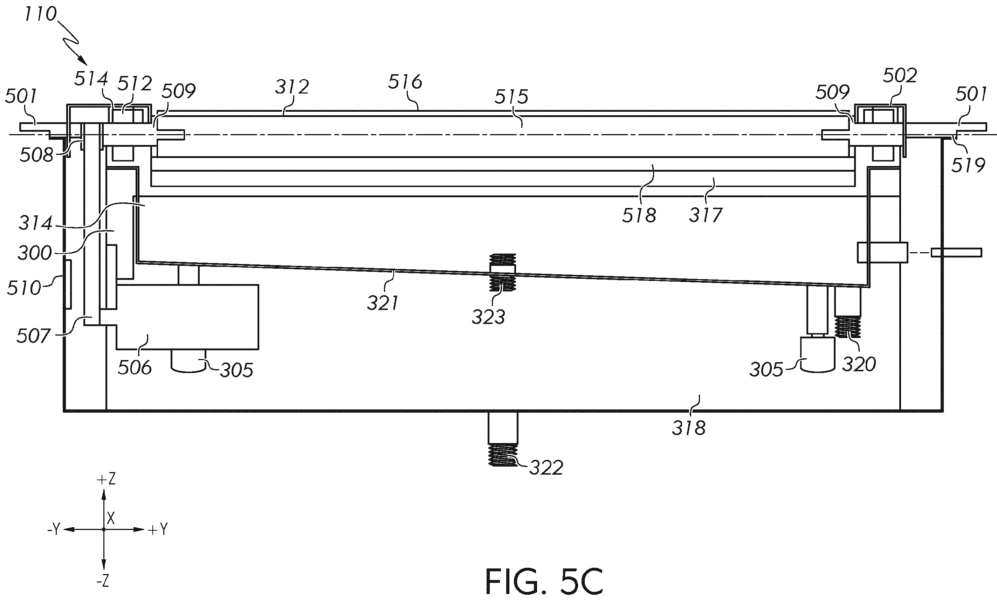

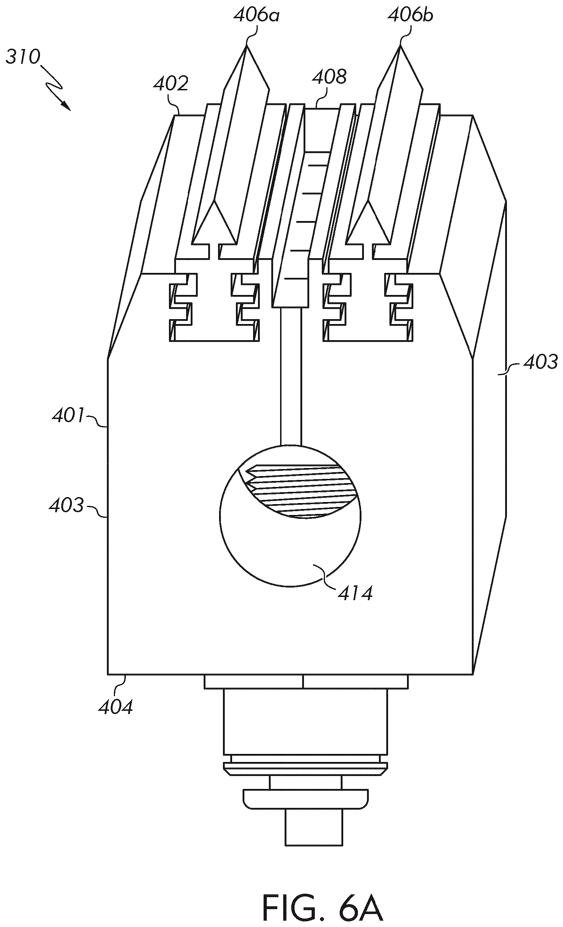

The dry wiper section 306, which in some embodiments is downstream of the wet cleaner section 304, removes excess liquid (e.g., cleaning fluid and contaminants) from the print head in advance of binder jetting. Similar to the purge wiper section 303, the dry wiper section 306 includes a dry wipe member 312 which contacts the print head after cleaning fluid is applied to the print head by the wet cleaning member 310 to remove contaminants and binder material dissolved by the cleaning fluid, as well as excess cleaning fluid, from the face of the print head before the print head prints another layer of binder material. The dry wiper section 306 further includes a dry wipe reservoir 317. In some embodiments, the dry wipe reservoir 317 is positioned vertically below the dry wipe member 312 and maintains a volume of cleaning fluid through which the dry wipe member 312 is rotated for cleaning the dry wipe member 312. By maintaining a suitable volume of cleaning fluid located for contacting the dry wipe member 312, the dry wipe reservoir 317 may reduce a total amount of cleaning fluid utilized by the cleaning station 110, as compared to cleaning stations including a large tank of cleaning fluid for use by a plurality of cleaning components. In some embodiments, the dry wiper section 306 and the purge wiper section 303 may have the same or similar construction. As shown in FIGS. 5 and 6A-6C, the dry wiper section 306 is located between the wet cleaner section 304 and the spit capture tray 307 along the +/-X direction in the FIGS. and parallel to the working axis 116.

In some embodiments, the dry wipe member 312 is coupled to a motor 506 (FIGS. 5A and 5C) that rotates the dry wipe member 312 about the rotational axis 519. The motor 506 can be, for example, a motor 506 coupled to a belt 507, which is in turn coupled to a pulley 508. The pulley 508 is coupled to a shaft 509 extending from a center of the dry wipe member 312. In various embodiments, the shaft 509 extends from the dry wipe member 312 in a direction along the rotational axis 519, and the shaft 509 is in a fixed relationship with the dry wipe member 312 such that rotation of the shaft 509 causes rotation of the dry wipe member 312 in the same direction. In some embodiments, the motor 506 can be coupled to the belt 507 through a pulley (not shown). Accordingly, when the motor 506 is activated, the motor 506 drives the belt 507, which rotates the pulley 508 and, therefore, the shaft 509 of the dry wipe member 312. As the shaft 509 is rotated, the dry wipe member 312 rotates about the rotational axis 519, moving the wiper blades 516 in a circular motion around the rotational axis 519.

FIG. 5C further includes an access panel 510 coupled to the overflow vessel 318. The access panel 510 enables access to the motor 506 and the belt 507, such as may be needed to adjust the tension of the belt. For example, if the dry wipe member 312 is moved in the -Z direction to reduce interference with the print head 150, the tension of the belt 507 may be adjusted to remove slack resulting from the decreased Z distance between the pulley 508 and the motor 506. To enable the dry wipe member 312 to be rotated while being mounted within the cleaning station 110, in some embodiments, the shaft 509 is coupled to a bearing 512 that is received within a bearing housing 514. The bearing housing 514 is fixedly coupled to the cleaning station frame 300.

In some embodiments, the dry wipe reservoir 317 is positioned vertically below the dry wipe member 312 (e.g., in the -Z direction in the FIGS.) and maintains a volume of cleaning fluid through which the dry wipe member 312 is rotated for cleaning the dry wipe member 312. As shown in FIGS. 5A and 5B, the dry wipe reservoir 317 includes at least one inlet port 520. For example, embodiments of the dry wipe reservoir 317 may include a single inlet port, two inlet ports, or three or more inlet ports. In some embodiments, the inlet port 520 extends through a wall of the dry wipe reservoir 317. The dry wipe reservoir 317 is coupled to a cleaning fluid reservoir 816 (FIG. 7) through tubing or piping via the inlet port 520. Accordingly, cleaning fluid may be pumped from the cleaning fluid reservoir through the inlet port 520 and into the dry wipe reservoir 317. In FIGS. 5A and 5B, the inlet port 520 is shown as extending through a bottom wall of the dry wipe reservoir 317. However, it is contemplated that, in some embodiments, the inlet port 520 may extend through one of the side walls of the dry wipe reservoir 317.

The spit capture tray 307 collects an amount of binder material ejected by the print head as it prepares for printing. For example, in some embodiments, the print head ejects a small amount of binder material as it is primed to printing and re-establishes the meniscus at each nozzle needed to ensure that the binder material is properly ejected during printing operations. In some embodiments, the spit capture tray 307 maintains a volume of liquid (e.g., cleaning fluid or binder material) into which the binder material from the print head is ejected. It is believed that the volume of liquid provides improved retention of the binder material that is ejected from the print head since the binder material is ejected in such small volumes that it may otherwise aerosolize and be caught in the air flow path generated during movement of the print head. In some embodiments, the spit capture tray 307 includes a first side wall 307a and a second side wall 307b that is parallel to the first side wall 307a. A base wall 307c extends between and separates the first side wall 307a and the second side wall 307b. In some embodiments, a height of the first side wall 307a is less than a height of the second side wall 307b. Alternatively, the height of the second side wall 307b is less than the height of the first side wall 307a. Such a construction enables the volume of liquid (and the binder material ejected into the spit capture tray 307) to flow over the side wall having the lower height and into the cleaning station vessel 314. However, in some embodiments, the first side wall 307a has a height that is equal to the height of the second side wall 307b. In such embodiments, the volume of liquid (and the binder material ejected into the spit capture tray 307) flows over both of the side walls 307a, 307b. Accordingly, in some embodiments in which the side walls are of equal height, the spit capture tray 307 may be self-cleaning, as the cleaning fluid continually flows over the walls to clean the spit capture tray 307. Alternatively, in some embodiments, the spit capture tray 307 may include at least one fluid outlet (not shown) through which the liquid can flow out of the spit capture tray 307. Accordingly, in some such embodiments, the liquid can be recycled, such as by connecting the fluid outlet to the cleaning fluid reservoir 816.

In some embodiments, the spit capture tray 307 includes at least one fluid inlet 309 through which cleaning fluid is provided to the spit capture tray 307. As shown in the embodiment in FIGS. 4 and 5A, the spit capture tray 307 includes two fluid inlets 309 positioned in the base wall 307c of the spit capture tray 307, although it is contemplated that, in other embodiments, the fluid inlet(s) 309 can be positioned in the first side wall 307a, the second side wall 307b, or lateral walls extending between the first side wall and the second side wall (not shown). In some embodiments in which two or more fluid inlets are included, each fluid inlet may be in the same wall as the other fluid inlet(s), or in a different wall than the other fluid inlet(s). As described in greater detail herein, cleaning fluid is provided to the fluid inlet(s) 309 by the cleaning fluid reservoir 816 (FIG. 7).

The capping section 308, which may be also considered an idle section, is a location where the print head may be temporarily placed in advance of binder jetting. In some embodiments, the capping section 308 supplies cleaning fluid to the print head faceplate to prevent binder from drying on the print head. Without being limited to theory, maintaining the purge wiper section 303, wet cleaner section 304, the dry wiper section 306, the spit capture tray 307, and the capping section 308 within a single cleaning station vessel 314 is highly advantageous as it streamlines cleaning fluid management by eliminating the need to control three separate cleaning station vessels. In this embodiment, cleaning fluid maintenance is limited to a single cleaning station vessel 314.

Moreover, as shown in FIGS. 5A-5C, in some embodiments, a bottom surface 321 of the cleaning station vessel 314 is sloped or angled in two directions (e.g., in the X and Y directions) to direct cleaning fluid to a main cleaning vessel drain 320. In other words, the bottom surface is angled with respect to a horizontal plane and with respect to a vertical plane. The main cleaning vessel drain 320 is positioned at a point within the cleaning station vessel that is the lowest vertical point of the cleaning station vessel. Accordingly, the cleaning fluid may be continuously pumped into the purge wiper section 303, the wet cleaner section 304, the dry wiper section 306, and the spit capture tray 307 and flow into the cleaning station vessel 314. When the cleaning fluid in the cleaning station vessel 314 reaches the main cleaning vessel drain 320, the cleaning fluid flows through the main cleaning vessel drain 320 and is returned to a cleaning fluid reservoir, as discussed in greater detail herein. The main cleaning vessel drain 320 may be, for example, a passive drain that enables the cleaning fluid to flow through it, or an active drain that actively removes the cleaning fluid from the cleaning station vessel 314. It should be understood that, although not shown in FIGS. 5A-5C the main cleaning vessel drain 320 is in fluid communication with a cleaning fluid reservoir, such as through piping or tubing and filters. In some embodiments, the cleaning station vessel 314 is sized to contain a volume of fluid that is greater than or equal to a maximum amount of fluid that can be supplied to the additive manufacturing apparatus 100. For example, the cleaning station vessel 314 may be sized to receive and contain at least the volume of cleaning fluid contained in the cleaning fluid reservoir and in the binder material reservoir such that, in the event of a failure, all fluid in the machine can be retained within the cleaning station vessel 314.

In some embodiments, the cleaning station vessel 314 is in fluid communication with an overflow vessel 318, as shown in FIGS. 5A-5C, such as through an overflow drain 323. The overflow drain 323 enables cleaning fluid that accumulates within the cleaning station vessel 314 to be removed from the cleaning station vessel 314 through an alternative flow path. For example, if the main cleaning vessel drain 320 becomes clogged, cleaning fluid may accumulate within the cleaning station vessel 314 to a liquid height that is greater than a vertical position of the top of the overflow drain 323. Accordingly, additional fluid may flow through the overflow drain 323 and into the overflow vessel 318. As shown in FIGS. 5A-5C, the overflow vessel 318 includes at least one overflow vessel drain 322. In some embodiments, cleaning fluid that is drained from the cleaning station vessel 314 into the overflow vessel 318 is drained from the overflow vessel 318 through the at least one overflow vessel drain 322, where it may be recombined with the cleaning fluid drained from the main cleaning vessel drain 320 and provided to the cleaning fluid reservoir 816 (FIG. 7). The at least one overflow vessel drain 322 may be, for example, a passive drain that enables the cleaning fluid to flow through it, or an active drain that actively removes the cleaning fluid from the overflow vessel 318. It should be understood that, although not shown in FIGS. 5A-5C, the at least one overflow vessel drain 322 is in fluid communication with a cleaning fluid reservoir, such as through piping or tubing. In some embodiments, the overflow vessel 318 is sized to contain a volume of fluid that is greater than or equal to a maximum amount of fluid that can be supplied to the additive manufacturing apparatus 100. For example, the overflow vessel 318 may be sized to receive and contain at least the volume of cleaning fluid contained in the cleaning fluid reservoir and in the binder material reservoir such that, in the event of a failure, all fluid in the machine can be retained within the overflow vessel 318.

As can be seen in FIGS. 5A-5C, in some embodiments, various components of the cleaning station 110 are mounted to a cleaning station frame 300. The cleaning station frame 300 enables the various components of the cleaning station 110, including the binder purge bin 302, the purge wiper section 303, the wet cleaner section 304, the dry wiper section 306, the spit capture tray 307, and the capping section 308 to be oriented and aligned with respect to one another and mounted within the additive manufacturing apparatus 100. In some embodiments, the cleaning station frame 300 is coupled to feet 305. The feet 305 can enable the components of the cleaning station components to be mounted to the cleaning station frame 300, properly aligned, and/or tested on a bench or other worktop surface before being mounted within the additive manufacturing apparatus 100. Accordingly, in some embodiments, the cleaning station frame 300 and the feet 305 can be used to associate the various components of the cleaning station 110 into a module that can be installed into and removed from the additive manufacturing apparatus.

In various embodiments, the cleaning station 110 further includes a top plate 501. The top plate 501, as shown in FIG. 4, provides a surface through which the cleaning station 110 can be mounted within the additive manufacturing apparatus. Additionally, in some embodiments, the top plate 501 may prevent build material and fluids (including, for example, cleaning fluid and binder material) from being deposited in other areas of the apparatus, such as between the cleaning station 110 and the working surface of the additive manufacturing apparatus 100.

In the embodiment shown in FIGS. 4 and 5C, a cover plate 502 is positioned along the length of the cleaning station 110 (in the +/-X direction in the FIGS.) from one end of the top plate 501 to the opposite end of the top plate 501. In some embodiments, the cover plate 502 covers mounting and motion components of the various sections of the cleaning station 110 to prevent fluids from contacting such components, and redirects any fluids contacting the cover plate 502 into the cleaning station vessel 314. As shown in FIG. 5C, in some embodiments, the cover plate 502 may be mounted to an interior of the overflow vessel 318, pass through, for example, a slot formed in the top plate 501, extend over the mounting and motion components, and is mounted to an interior of the cleaning station vessel 314. In some embodiments, the cover plate 502 may be mounted directly to the cleaning station vessel 314, or the cover plate 502 may be mounted to the cleaning station vessel 314 indirectly, such as through one or more components positioned between the cover plate 502 and the cleaning station vessel 314. However, it is contemplated that some embodiments may not include the cover plate 502.

Referring again to FIGS. 1 and 2A, in the embodiments described herein, the print head 150 may deposit the binder material 500 on a layer of build material 400 distributed on the build platform 120 through an array of nozzles 172 located on the underside of the print head 150 (e.g., the surface of the print head 150 facing the build platform 120). In one or more embodiments, the nozzles 172 may be piezoelectric print nozzles and, as such, the print head 150 is a piezo print head. In alternative embodiments, the nozzles 172 may be thermal print nozzles and, as such, the print head 150 is a thermal print head.

In general, after the print head 150 has deposited the binder material 500 on the layer of build material 400 positioned on the build platform 120 (FIG. 1), it is moved to the binder purge bin 302, where contaminants are dislodged via backpressure and, in some embodiments, using binder material 500 ejected from the nozzles 172. Next, the print head 150 is wiped by the purge wipe member 313 as it is moved through the purge wiper section 303 from the binder purge bin 302 toward the wet cleaner section 304 to direct loose contaminants and binder material from the face of the print head 150 into the binder purge bin 302. Next, the print head 150 is moved to the wet cleaner section 304 where a cleaning fluid is applied to the print head 150. The print head 150 is then moved to the dry wiper section 306 where the cleaning fluid and remaining contaminants are removed, before the print head 150 is moved to the spit capture tray 307. At the spit capture tray 307, any remaining contaminants are dislodged and the binder meniscus is reestablished by ejecting the binder material 500 from the nozzles 172. In some embodiments in which the print head 150 is idle, instead of moving to the spit capture tray 307, the print head 150 may be moved to the capping section 308 where it is kept moist to prevent the binder material from drying out and clogging the nozzles 172 of the print head 150.

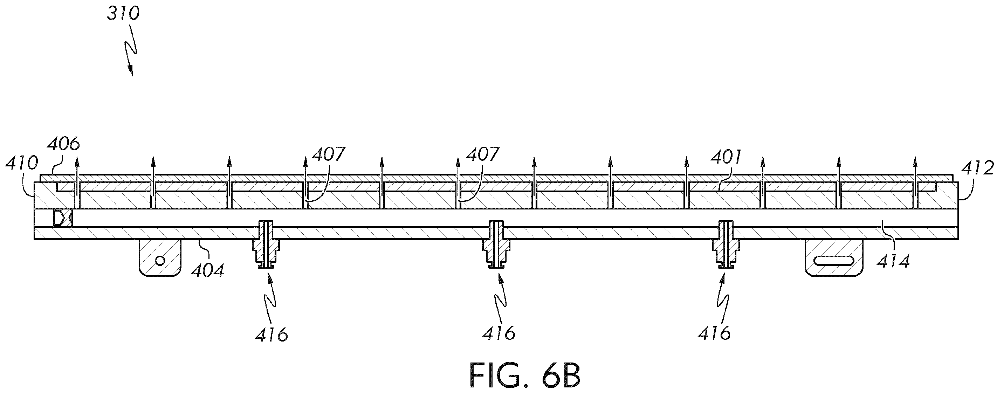

Various suitable embodiments are contemplated for the wet cleaner section 304. As shown in FIGS. 6A and 6B, the wet cleaner section 304 includes a wet cleaning member 310. The wet cleaning member 310 includes any suitable mechanism for passively applying cleaning fluid to a print head, for example, a brush, a squeegee, and the like. As used herein, "passively applying" means the wet cleaning member 310, or the cleaning fluid provided by the wet cleaning member 310, contacts the print head as it traverses the wet cleaner section 304. As described hereinabove, in some embodiments, the wet cleaning member 310 is a stationary cleaning member that provides a volume of cleaning fluid to the face of the print head as the print head traverses the wet cleaner section 304.

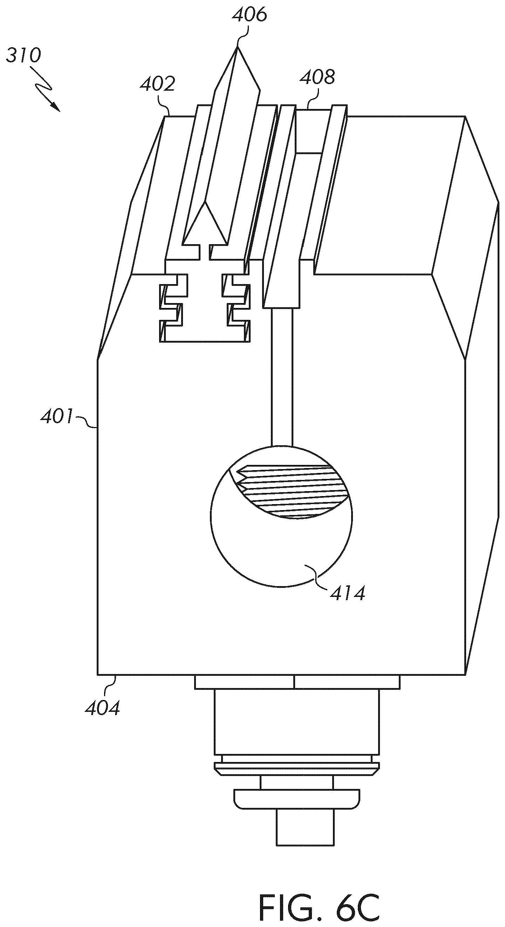

Referring now to FIGS. 6A-6E, additional embodiments of the wet cleaner section 304 are schematically depicted. Specifically as shown in FIGS. 6A-6E, a wet cleaning member 310 for applying cleaning fluid to the print head 150 is depicted. The wet cleaning member 310 includes a wet cleaning body 401 having a top side 402 and a bottom side 404. In some embodiments, the wet cleaning member 310 includes at least one wiper blade 406 vertically extending from the top side 402 of the wet cleaning body 401. In the embodiment shown in FIGS. 6A and 6B, the wet cleaning member 310 includes a first wiper blade 406a and a second wiper blade 406b (collectively, the wiper blades 406), spaced apart from one another. In the embodiment shown in FIG. 6C, the wet cleaning member 310 includes a single wiper blade 406. Accordingly, any number of wiper blades may be included in the wet cleaning member 310.

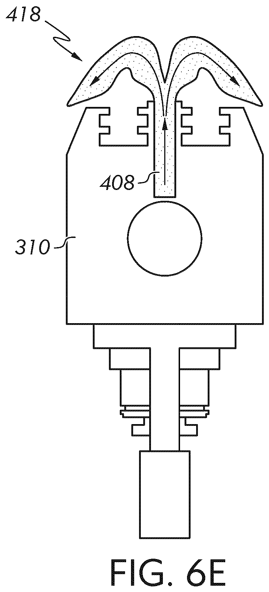

Although the wet cleaning member 310 is described in various embodiments as including at least one wiper blade 406, in some embodiments, the wet cleaning member 310 does not include wiper blades, as shown in FIG. 6E.

A fluid channel 408 extends horizontally from a first end 410 of the wet cleaning body 401 to a second end 412 of the wet cleaning body 401, as shown in FIGS. 6A-6C, and defines a recessed path within the wet cleaning body 401. The fluid channel 408 has an open top to allow cleaning fluid to flow out of the fluid channel 408. The rate of the flow of the cleaning fluid through the fluid channel 408 is controlled in some embodiments, thereby enabling control of the height of a fluid wall 418 created by the cleaning fluid, shown in FIG. 6E. In some embodiments, such as the embodiment shown in FIGS. 6A and 6B, the fluid channel 408 is positioned between the first wiper blade 406a and the second wiper blade 406b. Although the wiper blades 406 and the fluid channel 408 are described herein as extending from a first end 410 to the second end 412 of the wet cleaning body 401, in some embodiments, the wet cleaning body 401 has a length from the first end 410 to the second end 412 that is greater than a length of the wiper blades 406 and/or the fluid channel 408. For example, in some embodiments, the wiper blades 406 and/or the fluid channel 408 may be positioned within the wet cleaning body 401 with the wet cleaning body 401 extending about 1 mm, about 2 mm, about 5 mm, or about 10 mm on each end. This additional length of the wet cleaning body 401 can enable, for example, the wet cleaning body 401 to extend from end to end of the cleaning station while the wiper blades 406 and/or the fluid channel 408 are sized to have substantially the same length as the print head.

As shown in FIG. 6E, in some embodiments in which the wet cleaning member 310 does not include wiper blades 406, the flow of the cleaning fluid through the fluid channel 408 is controlled to provide a touchless wiping system that uses the fluid wall 418 to wipe contaminants from the print head without requiring the use of wiper blades. Moreover, it is contemplated that, in some embodiments, the wet cleaning member 310 may include wiper blades 406, but the wiper blades 406 do not contact the print head during the cleaning. For example, the wiper blades 406, in some embodiments, may serve to direct and control the cleaning fluid that is applied to the print head.

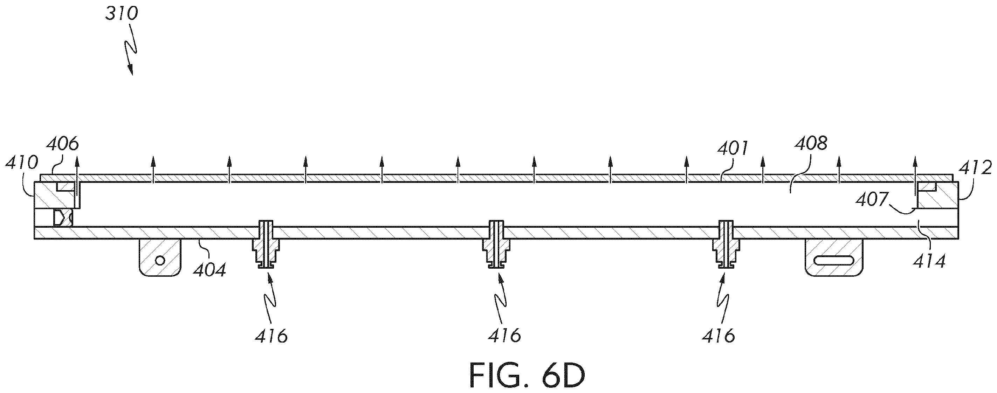

As shown in FIGS. 6A-6C, the wet cleaning member 310 further includes a cleaning manifold 414 that extends below the fluid channel 408 within the wet cleaning body 401. The cleaning manifold 414 is in fluid communication with the fluid channel 408 through at least one fluid port 407 to provide cleaning fluid from the cleaning manifold 414 to the top side 402 of the wet cleaning body 401, e.g., via the fluid channel 408. In the embodiment shown in FIG. 6B, twelve fluid ports 407 provide cleaning fluid from the cleaning manifold 414 to the fluid channel 408. Each fluid port 407 may have a circular cross-section, a square cross-section, or other cross-section suitable for fluid flow. However, in the embodiment shown in FIG. 6D, one fluid port 407 provides cleaning fluid from the cleaning manifold 414 to the fluid channel 408. The fluid port 407 in FIG. 6D extends from the first end 410 to the second end 412 of the wet cleaning body 401 and has a substantially rectangular cross-section. Other shapes, sizes, and quantities of fluid ports are possible and contemplated. In some embodiments, such as the embodiment shown in FIG. 6B where the fluid channel 408 is positioned between the first wiper blade and the second wiper blade 406b, the fluid port 407 is also disposed between the first wiper blade 406a and the second wiper blade 406b.

In various embodiments, the cleaning fluid is provided to the cleaning manifold 414 through a plurality of cleaning fluid inlets 416 that are fluidly coupled to a cleaning fluid reservoir or cleaning fluid management system, described in greater detail herein. The plurality of cleaning fluid inlets 416 may be, for example, fluid conduits that extend vertically upward through the bottom side 404 of the wet cleaning body 401. However, in some embodiments, the plurality of cleaning fluid inlets 416 additionally or alternatively extend from a side 403 of the wet cleaning body 401 adjacent to the top side 402 and the bottom side 404 of the wet cleaning body 401. The plurality of cleaning fluid inlets 416 are operable to receive the cleaning fluid and provide the cleaning fluid to the cleaning manifold 414. The cleaning fluid inlets 416 are in fluid communication with the fluid port 407 through the cleaning manifold 414 such that cleaning fluid enters the cleaning manifold 414 through the cleaning fluid inlets 416 and exits the cleaning manifold 414 through the fluid port 407.

In some embodiments, a baffle (not shown) is positioned within the fluid channel 408. The baffle can include one or more apertures or pores through which the cleaning fluid flows after entering the fluid channel 408 from the fluid port(s) 407. When included, the baffle can facilitate equilibration of the flow of the cleaning fluid along the length of the fluid channel 408, such that a depth of the fluid along the length of the fluid channel 408 is substantially constant. Moreover, in some embodiments, the baffle can reduce fluctuations in the height of a fluid wall created by the cleaning fluid flowing through the fluid port(s) 407.

Accordingly, in some embodiments, the cleaning fluid is fed through the wet cleaning member 310 continuously during operation of the additive manufacturing apparatus. After the wet wipe member applies liquid to the print head, the liquid then overflows back into the cleaning station vessel 314. As described more herein, a main cleaning vessel drain 320 (see FIG. 5B) is disposed within the cleaning station vessel 314, which directs cleaning fluid into a cleaning fluid reservoir 816 (see FIG. 7), and is then pumped back into the wet cleaning member 310. The continuous cleaner circulation and recirculation is described more herein. In some embodiments, the rate of the flow of the cleaning fluid through the fluid channel 408 is controlled in some embodiments, thereby enabling control of the height of a fluid wall 418 created by the cleaning fluid, shown in FIG. 6E. For example, the height of the fluid wall 418 may be increased to apply cleaning fluid to the print head, and decreased when the print head is not over the wet cleaner section 304, or when the cleaning fluid should not be applied to the print head passing over the wet cleaner section 304.

Accordingly, in some embodiments, when the wet cleaning member 310 is activated, cleaning fluid is supplied to the print head 150 to dissolve contaminants. While the cleaning fluid may dissolve the contaminants in some cases, the contaminants may also be considered as mixed or suspended within the cleaning fluid. The cleaning manifold 414 and the fluid channel 408 ensure that cleaning fluid can be directly applied to the print head 150 during cleaning while compensating for any delay that may result from the use of pumps in the fluid management system, as discussed in greater detail herein. In particular, the cleaning manifold 414 and the fluid channel 408 provide a local reservoir of cleaning fluid that can be used even when the pumps are not actively providing cleaning fluid to the wet cleaning member 310.

In the embodiment depicted in FIG. 6A, the cleaning fluid does not flow to the top of the wiper blades 406. However, it is contemplated that in other embodiments, a pair of walls extends between the first wiper blade 406a and the second wiper blade 406b from the top side 402 of the wet cleaning body 401 to a top of each of the first wiper blade 406a and the second wiper blade 406b. The pair of walls thus extend the depth of the fluid channel 408 to the top of the wiper blades 406, enabling the cleaning fluid to fill up to the top of the wiper blades 406. Such embodiments may enable greater dissolution of contaminants on the print head 150 and greater control of the cleaning fluid between the wiper blades 406.

In further embodiments, the dry wipe member 312 may be rotated such that the dry wipe member 312 the wiper blades that contact the print head are rotated out of the volume of the cleaning fluid with sufficient time to allow the cleaning fluid to drain away from the dry wiper blades 516. The dry wipe member 312 contacts the print head 150 as it is moved through the dry wiper section 306 to remove cleaning fluid, contaminants and other debris from the print head 150 after the print head 150 is cleaned by the wet cleaning member 310.

Having described various sections of an additive manufacturing apparatus 100 (including a print head 150) and associated cleaning station 110, a fluid management system suitable for providing binder material to the print head 150 and cleaning fluid to the cleaning station 110 will now be described in detail. As mentioned herein, the term "circuit" (e.g., binder material circuit 950 and cleaning fluid circuit 920) refers to the loop that the fluid (e.g., binder material or cleaning fluid) takes to and from a reservoir (e.g., binder reservoir 802 or cleaning fluid reservoir 816). As used herein, the term "pathway" refers to a section of a circuit that follows the route of a fluid to or from a reservoir. There may be multiple pathways a fluid may take in a circuit.

Referring now to FIG. 7 in conjunction with FIG. 1, a fluid management system 900 includes a binder material circuit 950 for providing binder material 500 to a print head 150 and for recirculating the binder material 500 not deposited on build material 400 positioned on the build platform 120.

Still referring to FIGS. 1 and 7, in general, the binder material circuit 950 includes a binder reservoir 802 that is in fluid communication with the print head 150 and the binder purge bin 302. The binder reservoir 802 may be any vessel suitable to contain binder material, such as a drum, a tank, or the like. In some embodiments, the binder material flows from the binder reservoir 802 to a print head manifold 804 by a pump 808, and the print head manifold 804 in turn delivers the binder material to the print head 150. The print head manifold 804 enables the separation of the binder material from the print head 150 and allows for the binder material to be replaced or refilled while the additive manufacturing apparatus 100 is actively printing. The print head 150 discharges the binder material through nozzles into, for example, the build platform 120 and the binder purge bin 302. In some embodiments, the binder material flows from the binder reservoir 802, through an actuating valve 880, through the pump 808, and through an actuating valve 882 to the print head manifold 804.

In some embodiments, the binder material flows from the binder reservoir 802, through an actuating valve 880, through the pump 808, and through an actuating valve 886 back to the binder reservoir 802 in a recirculation loop. In some embodiments, the pump 808 may be in fluid communication with a degasser 891. The degasser 891 is a device that is generally understood to be capable of removing gases, particularly dissolved gases, from the binder material. Gases in the binder material, such as air or other volatile components, can negatively impact the printing process and the quality of the printed object. For example, dissolved gases in the binder material can lead to issues such as bubble formation, uneven binder distribution, or inconsistent layer bonding. These issues can result in defects in the printed object, compromising its mechanical properties and overall integrity.

In some embodiments, binder material discharged into the binder purge bin 302 passes through an active drain 806. The binder material flows from the active drain 806 through an actuating valve 884, through actuating valve 888, through the pump 808, and to the binder reservoir 802 through actuating valve 890. In some embodiments, the active drain 806 is in fluid communication with a filter 810 that may remove contaminants or large particles, such as polymers that have agglomerated as a result of partial evaporation of the binder material and build material particles, to ensure that the binder material that is returned to the binder reservoir 802 is suitable for recirculation through the binder material circuit 950.

In some embodiments, binder material may be drained from the print head manifold 804. The binder material flows from the print head manifold 804, through the actuating valve 882, through the actuating valve 888, through the pump 808, and back to the binder reservoir 802 through the actuating valve 890. Binder material may be drained from the print head manifold 804 during normal course of operation due to an actuating valve or as part of maintenance. As such, the calibration of the various fluid pathways described herein may provide the same benefits to pathways which see reversal of fluid flow.

In some embodiments, each one of the actuating valves 880, 882, 884, 886, 888, 890 can be, for example, a pinch valve, a check valve, a pneumatic valve, and any other type of valve now known or later developed.

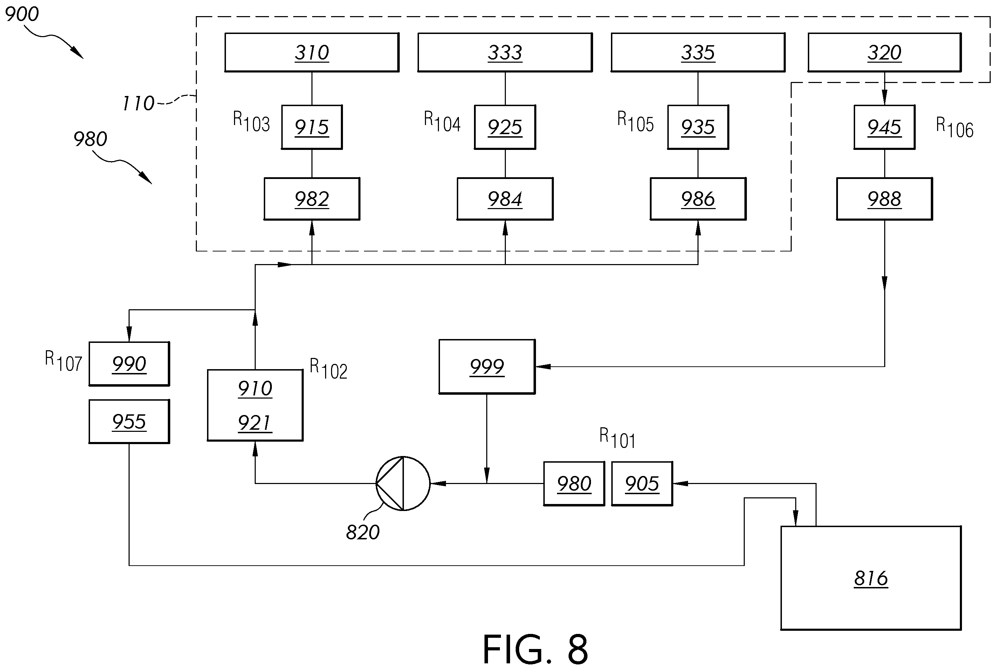

Referring now to FIG. 8 in conjunction with FIGS. 1 and 6E, a fluid management system 900 includes a cleaning fluid circuit 920 for providing cleaning fluid to the cleaning station 110 (FIG. 4) and for recirculating and returning the cleaning fluid to a liquid tank.

In general, the cleaning fluid circuit 920 includes a cleaning fluid reservoir 816 that is in fluid communication with the cleaning station 110 (FIG. 4). The cleaning fluid reservoir 816 may be any vessel suitable to contain cleaning fluid, such as a drum, a tank, or the like. In some embodiments, the cleaning fluid flows from the cleaning fluid reservoir 816 to the cleaning station 110 (FIG. 4) by a pump 820. In some embodiments, cleaning fluid may flow to the purge wiper section 303 (FIG. 4), the wet cleaner section 304 (FIG. 4), the dry wiper section 306 (FIG. 4), the spit capture tray 307 (FIG. 4), the capping section 308 (FIG. 4) and the wet cleaning member 310 (FIG. 6E and FIG. 8). Referring again to FIG. 8, in some embodiments, the wet cleaning member 310 delivers cleaning fluid to clean to the nozzles of the print head 150 (FIG. 1). The wet cleaning member 310 actively cleans the nozzles of the print head 150 (FIG. 1) using a designated flowrate of cleaning fluid, as set by the calibration process described herein. If the flowrate is too low, the fluid wall 418 (FIG. 6E) may not contact the nozzles of the print head 150 (FIG. 1). If the flowrate is too high, the fluid wall 418 (FIG. 6E) may get cleaning fluid too high into the nozzles of the print head 150 (FIG. 1), which could lead to cross-contamination between binder material and cleaning fluid in the build operation or a clogged nozzle.

In some embodiments, the cleaning fluid flows from the cleaning fluid reservoir 816, through an actuating valve 980, through the pump 820, and through actuating valve 982 to the wet cleaning member 310. In some embodiments, the cleaning fluid flows from the cleaning fluid reservoir 816, through an actuating valve 980, through the pump 820, and through actuating valves 982, 984, and 986 to the wet cleaning member 310 and the cleaning station trays 333 and 335, which may comprise the purge wiper section 303 (FIG. 4), the wet cleaner section 304 (FIG. 4), the dry wiper section 306 (FIG. 4), the spit capture tray 307 (FIG. 4), the capping section 308 (FIG. 4).

In some embodiments, the cleaning fluid flows from the cleaning fluid reservoir 816, through the actuating valve 980, through the pump 820, and through an actuating valve 990 back to the cleaning fluid reservoir 816 in a recirculation loop. In some embodiments, cleaning fluid discharged into the main cleaning vessel drain 320 flows from the main cleaning vessel drain 320 through an actuating valve 988, through actuating valve 999, through the pump 820, and to the cleaning fluid reservoir 816 through actuating valve 990. In some embodiments, the main cleaning vessel drain 320 is in fluid communication with a filter 910 that may remove contaminants or large particles to ensure that the cleaning fluid that is returned to the cleaning fluid reservoir 816 is suitable for recirculation through the cleaning fluid circuit 920.

In some embodiments, the actuating valves 980, 982, 984, 986, 988, 990, and 999 can be, for example, pinch valves, check valves, pneumatic valves, and other types of valves known by one skilled in the art.

In some embodiments, the use of a single pump for the binder material circuit 950 or the cleaning fluid circuit 920 may lead to challenges such as flow imbalances, pressure variations, among other issues. However, as stated herein, the design of the additive manufacturing system makes it such that a single pump is desirable to maximize design space and minimize failure points. One way to overcome the challenges presented by utilizing one pump is to provide a mechanism for calibrating the various pathways of the binder material circuit 950 and cleaning fluid circuit 920 such that all pathways can operate with a single pump and substantially the same flow rate. It is contemplated that the calibration process described herein is performed one time for each of the binder material circuit 950 and the cleaning fluid circuit 920 prior to beginning building operations.

Given the foregoing, flow-regulating valves are disposed along various pathways such that the resistance of the pathway can be adjusted to allow for smaller or larger cross sections, which varies the fluid flowrate within the pathway. The calibration process is similar to impedance matching, a technique used in electronic systems to optimize the transfer of power between two interconnected components. In the present disclosure, the resistances are "matched" between pathways such that:

$$P_{pathway} = A_{visc} \cdot R_{pathway} \cdot Q_{pathway}$$

(Equation 1)

wherein $P_{pathway}$ is defined as the pressure of the pump (as set by a selected pump speed), $A_{visc}$ is the viscosity of the fluid, and R represents the resistance of the pathway (which may be a sum of several resistances across connected pathways), and $Q_{pathway}$ is the flowrate of the fluid in the pathway.

The viscosity of a fluid may change over time in an additive manufacturing system. As builds are completed and fluid is circulated through the machine, there may be accumulation of contaminants or degradation of the fluid's chemical composition. During the prolonged operation of the system, airborne particles, dust, or residues from the printing or cleaning processes may gradually mix with the fluid, leading to an increase in viscosity. Additionally, exposure to high temperatures and repeated use can cause the breakdown of molecular structures within the fluid, resulting in changes to its rheological properties. This phenomenon may impede the fluid's ability to flow smoothly in the additive manufacturing process, potentially affecting the quality and efficiency of the printed products. As the viscosity of the fluid changes, the flowrate of the fluid will also change throughout the system. A fluid management system implemented into an additive manufacturing machine should therefore be able to increase or decrease the flowrate of fluid as needed in order to keep up with the viscosity changes and detect when a fluid is no longer suitable for use.

As used herein, a "suitable" viscosity for a fluid within the additive manufacturing machine is a viscosity that is appropriate for the specific requirements of the printing technology and materials used. The suitable viscosity may be a range that allows for proper fluid flow through the printing nozzles or deposition systems, facilitating accurate and uniform material deposition. Notably, the suitable viscosity can vary based on factors such as the printing method, material composition, and equipment specifications.

The fluid within the fluid management system 900 (e.g., binder material and/or cleaning fluid) may be evaluated - manually or with a suitable viscosity detector - before loading the fluid into the additive manufacturing apparatus 100. The viscosity of the fluid is then given a baseline level or a known value when utilized in Equation 1. During a build, if the set pump speed must be increased to maintain a desired flow rate (e.g., for the single pump 808 within the binder material circuit 950 or single pump 820 within the cleaning fluid circuit 920), this likely corresponds to the viscosity of the fluid having increased. The aforementioned increasing of the pump speed to maintain flow is how a change in viscosity of the fluid is "detected". It is noted that the method described herein for detecting is manual. However, other detection methods are contemplated that may be automated. For example, the viscosity of the fluid could be monitored in-situ by any device known in the art that is capable of detecting the flowrate of a fluid are encompassed by the scope of the present disclosure (e.g, a rotameters, ultrasonic flow sensors, Coriolis flow meters, and the like).

As mentioned herein, achieving uniform flow across pathways is important in a time-sensitive operation such as additive manufacturing. Many operations are completed in a short period of time, and the longer it takes for flowrates to stabilize or reach a substantially uniform flowrate in a single pathway, the longer the operation can take and may lead to build quality issues. Calibrating the pathways for uniform flow before beginning a build may lead to reduced transience, or time needed to reach a stable flowrate.

Referring again to FIG. 7, needle valves 835, 845, 855, 865, and 875 are disposed along various pathways within binder material circuit 950. A pathway may be defined as the route (e.g., via conduit or the like) that the binder material takes away from the binder reservoir 802 or toward the binder reservoir 802. It should be understood that the actuating valves 880, 882, 884, 886, 888, and 890 facilitate binder material flow throughout the binder material circuit 950. The needle valves 835, 845, 855, 865, and 875 function as resistance adjustments for calibration purposes and do not affect where fluid is directed. The adjustment process involving the needle valves 835, 845, 855, 865, and 875 will now be described in further detail.

A first pathway may be defined as the pathway (e.g., via conduit or the like) that the binder material takes away from the binder reservoir 802, through the pump 808, and into the print head manifold 804. As used herein, this circuit may be referred to as "the print head fill circuit" and may comprise needle valve 835 and associated resistance $R_1$, the filter 810 and associated resistance $R_2$, and needle valve 845 and associated resistance $R_3$.

A second pathway may be the pathway (e.g., via conduit or the like) that the binder material takes from the binder reservoir 802, through the pump 808, and back to the binder reservoir 802. As used herein, this pathway may be referred to as "the binder material recirculation pathway" and may comprise needle valve 835 and associated resistance $R_1$, the filter 810 and associated resistance $R_2$, and needle valve 865 and associated resistance $R_5$. It should be understood that once a flow-regulating valve (e.g., needle valve 835) is adjusted, it is not readjusted in subsequent fluid pathway calibrations.

A third pathway may be the pathway (e.g., via conduit or the like) that the binder material takes from the print head manifold 804 to the binder reservoir 802. This pathway may be for draining the print head during a build or for maintenance.

As used herein, this circuit may be referred to as "the binder material return pathway" and may comprise the needle valve 845 and associated resistance $R_3$, the filter 810 and associated resistance $R_2$, and needle valve 875 and associated resistance $R_6$.

A fourth pathway may be the pathway (e.g., via conduit or the like) that the binder material takes from the drain 806 to the binder reservoir 802. As used herein, this pathway may be referred to "the binder material drain pathway" and may comprise needle valve 855 and associated resistance $R_4$, the filter 810 and associated resistance $R_2$, and needle valve 875 and associated resistance $R_6$.

The needle valves 835, 845, 855, 865, 875 may be adjusted by moving a needle into or out of the valve, creating a smaller cross-sectional area or a larger cross-sectional area in the valve, respectively. This change in cross-sectional area affects the resistance faced by the flow of binder material through various pathways of the binder material circuit 950. For example, if the needle valve 845 is adjusted so that the cross-sectional area of the valve is smaller, the binder material flowing through the valve faces a bottleneck, or an increased resistance, in passing through an area of the pathway.

Although needle valves are described herein as the mechanism by which the flow rate is changed in the various pathways, this disclosure should not be construed to limit those mechanisms to needle valves. The present disclosure should be read to encompass any and all mechanisms by which flow rates are adjusted, including, but not limited to, flow control valves and the like.

Adjusting the flow rates in each pathway allows each pathway to operate with one pump within the circuit efficiently, as opposed to changing the pump speed to achieve a desired flow rate. The pump 808 switches between servicing different pathways during building operations by opening or closing various actuating valves 880, 882, 884, 886, 888, 890. It is contemplated that the pump 808 may switch between servicing different pathways at the direction of a controller executing machine-readable instructions. Having multiple pathways operating during a build makes it desirable to avoid having to adjust the pump to meet the flow conditions for each pathway. Instead, the pathways can be calibrated in an iterative manner such that the pump 808 produces a uniform flowrate throughout each circuit, as seen in Equation I.

For example, in some embodiments, the print head manifold 804 may receive the binder material at a threshold flowrate $Q_1$ that is sufficient to maintain a supply of the binder material in the print head manifold 804 while the additive manufacturing apparatus 100 is printing such that the print head 150 may deposit the binder material. If the flowrate is too low, the print head 150 may have insufficient binder material to complete a build. The threshold flowrate $Q_1$ may be a known value as determined by the amount of binder material required to complete a build. Based on the selected speed of the pump (and corresponding pressure), the needle valves within the print head fill circuit (e.g., 880 and 882) may be adjusted such that the flowrate is equivalent to the threshold flowrate, as measured by a flow sensor 821. In some embodiments, the flow sensor 821 may transmit a signal to a user interface device alerting a user of the flowrate measured by the flow sensor 821.

In some embodiments, the print head fill pathway may be the first pathway to be calibrated to secure the threshold flowrate $Q_1$ such that the other pathways (e.g., the recirculation pathway, the return pathway, and the drain pathway) may be able to operate with substantially the same flowrate as the print head fill pathway. In embodiments where the print head fill pathway is the first pathway, needle valves 835 and 845 may be adjusted in order to achieve the threshold flowrate $Q_1$ that is sufficient to maintain a supply of the binder material in the print head manifold 804. Once $Q_1$ is reached, the actuating valve 882 may close and the calibration of the remaining circuits may begin, following a similar procedure.

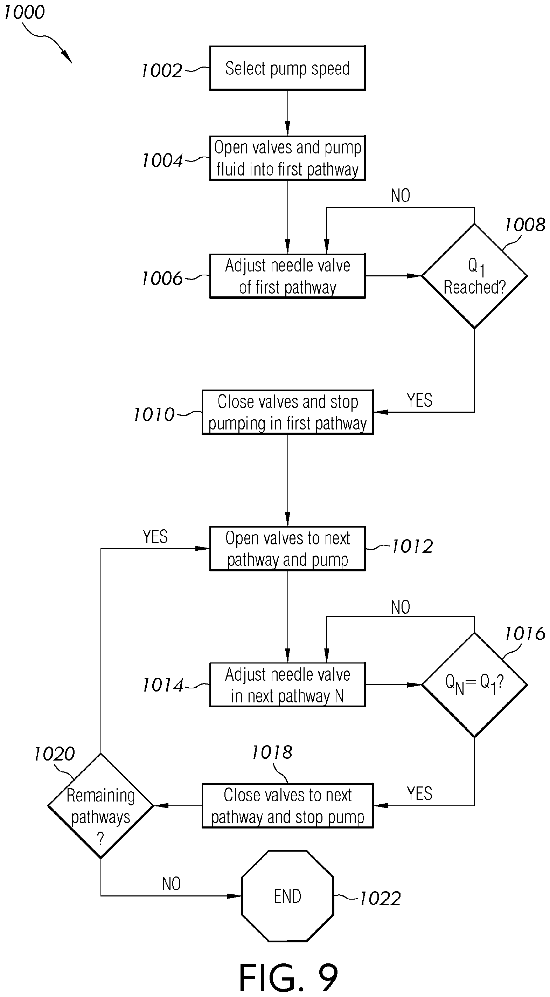

FIG. 9 depicts a flowchart of an example method 1000 of calibrating the binder material circuit 950 of the fluid management system 900. At block 1002, a speed is selected for the single pump 808 in the binder material circuit 950. Then, at block 1004, binder material is pumped into the the first pathway (e.g. the print head fill pathway). In some embodiments, the print head fill pathway is contemplated as the first circuit, other fluid pathways may have a different first circuit due to a different threshold flowrate requirement.

At block 1006, the needle valves 835 and 845 are adjusted to change the resistance of the first pathway. A flow sensor 821 may provide a flowrate of the binder material in the first pathway. At block 1008, a determination is made regarding whether the flowrate has reached a threshold flowrate $Q_1$. As discussed herein, the threshold flowrate $Q_1$ is the flowrate at which the binder material may be supplied to the print head manifold 804 such that the print head 150 may have a constant supply of binder material during a build. If the flowrate is not substantially the same as a threshold flowrate $Q_1$, block 1006 is repeated. At block 1010, once a threshold flowrate $Q_1$ is reached, the binder material stops being pumped into the first pathway, and the actuating valve 882 closes. The threshold flowrate $Q_1$ may be reached after the flowrate remains substantially the same for a of period of time. For example, the flowrate may remain substantially the same for longer than at least three seconds. It is contemplated that blocks 1004-1010 may be completed by the operation of a controller adjusting the needle valves (or flow control valves) in response to the flow sensor reading. It should be understood that any step in the method described herein may be performed in an automated manner via a controller.

At block 1012, the binder material is pumped into a subsequent pathway (e.g., the binder material recirculation pathway). For example, if the subsequent pathway is the recirculation pathway, actuating valve 886 opens. At block 1014, the needle valve 865 may be adjusted based on the flow rate indicated by the flow sensor 821. At block 1016, a determination is made regarding whether the flowrate $Q_N$ in the subsequent pathway is substantially the same as that of

$Q_1$. If the flowrate $Q_N$ is not substantially the same to $Q_1$, block 1014 may be repeated. At block 1018, once flowrate $Q_N$ is substantially the same as $Q_1$, the binder material stops being pumped into the pathway. At block 1020, depending on how many other pathways there are in the system that have yet to be calibrated, the calibration process may be repeated, starting at block 1012. Once all pathways (e.g., the binder material return pathway, and the binder material drain pathway) have $Q_N$ is substantially the same as $Q_1$, the calibration process is complete at block 1022. It is contemplated that blocks 1012-1020 may be completed by operation of a controller adjusting the needle valves (or flow control valves) in response to the flow sensor reading. It should be understood that any step in the method described herein may be performed in an automated manner via a controller.

It is contemplated that the method 1000 of FIG. 9 may also be utilized to detect a clog in the fluid management system 900. For example, if a flowrate ($Q_N$) of the fluid within any of the plurality of fluid pathways is not substantially the same as $Q_1$ after more than 10 seconds or a period of time that is longer than the average time to stabilize flow, the user interface may display an alert to instruct a user to manually inspect the clogs. Inspecting for clogs may include a visual examination, isolation of the pathway where a clog is suspected, and the use of non-destructive testing (NDT), such as ultrasonic testing, to identify the location and nature of the clog without damaging the pipe.

Referring again to FIG. 8, needle valves 905, 915, 925, 935, 945, and 955 are disposed along various pathways within cleaning fluid circuit 920. A pathway may be defined as the route (e.g., via conduit or the like) that the cleaning fluid takes away from the cleaning fluid reservoir 816 or toward the cleaning fluid reservoir 816. It should be understood that the actuating valves 980, 982, 984, 986, 988, 990, and 999 facilitate cleaning fluid flow throughout the cleaning fluid circuit 920. The needle valves 905, 915, 925, 935, 945, and 955 function as resistance adjustments for calibration purposes and do not affect where fluid is directed. The adjustment process involving the needle valves 905, 915, 925, 935, 945, and 955 will now be described in further detail.

A first pathway may be defined as the pathway (e.g., via conduit or the like) that the cleaning fluid takes away from the cleaning fluid reservoir 816, through the pump 820, and into the wet cleaning member 310. As used herein, this pathway may be referred to as "wet cleaning member pathway" and may comprise needle valve 905 and associated resistance $R_{101}$, the filter 910 and associated resistance $R_{102}$, and needle valve 915 and associated resistance $R_{103}$.

A second pathway may be defined as the pathway (e.g., via conduit or the like) that the cleaning fluid takes away from the cleaning fluid reservoir 816, through the pump 820, and into the cleaning station 110 to the cleaning station trays 333 and 335, which may comprise the purge wiper section 303 (FIG. 4), the wet cleaner section 304 (FIG. 4), the dry wiper section 306 (FIG. 4), the spit capture tray 307 (FIG. 4), the capping section 308 (FIG. 4). As used herein, this pathway may be referred to as "cleaning station fill pathway" and may comprise needle valve 905 and associated resistance $R_{101}$, the filter 910 and associated resistance $R_{102}$, needle valve 915 and associated resistance $R_{103}$, needle valve 925 and associate resistance $R_{104}$, and needle valve 935 and associated resistance $R_{105}$. It is contemplated that needle valve 915 and associated resistance $R_{103}$ may or may not be within the cleaning station fill pathway, depending on whether calibration is being performed or a build is taking place. It should be understood that once a needle valve (e.g., needle valve 905) is adjusted, it is not readjusted in subsequent fluid pathway calibrations.

A third pathway may be the pathway (e.g., via conduit or the like) that the cleaning fluid takes from the cleaning fluid reservoir 816 through the pump 820, and back to the cleaning fluid reservoir 816. As used herein, this pathway may be referred to as "the cleaning fluid recirculation pathway" and may comprise needle valve 905 and associated resistance $R_{101}$, the filter 910 and associated resistance $R_{102}$, and needle valve 955 and associated resistance $R_{107}$.

A fourth pathway may be the pathway (e.g., via conduit or the like) that the cleaning fluid takes from the main cleaning vessel drain 320 to the cleaning fluid reservoir 816. As used herein, this pathway may be referred to "the cleaning fluid drain pathway" and may comprise needle valve 945 and associated resistance $R_{106}$, the filter 910 and associated resistance $R_{102}$, and needle valve 955 and associated resistance $R_{107}$.

The needle valves 905, 915, 925, 935, 945, and 955 may be adjusted by moving a needle into or out of the valve, creating a smaller cross-sectional area or a larger cross-sectional area in the valve, respectively. This change in cross-sectional area affects the resistance faced by the flow of cleaning fluid through various pathways of the cleaning fluid circuit 920. For example, if the needle valve 915 is adjusted so that the cross-sectional area of the valve is smaller, the cleaning fluid flowing through the valve faces a bottleneck, or an increased resistance, in passing through an area of the pathway.

Adjusting the needle valves in each pathway allows each pathway to operate with one pump. The pump 820 switches between servicing different pathways during building operations by opening or closing various actuating valves 980, 982, 984, 986, 988, 990, and 999. It is contemplated that the pump 820 may switch between servicing different pathways at the direction of a controller executing machine-readable instructions. Having multiple pathways operating during a build makes it desirable to avoid having to adjust the pump 820 to meet the flow conditions for each circuit. Instead, the pathways can be calibrated such that the pump produces a uniform flowrate throughout each pathway, as seen in Equation I.

For example, in some embodiments, the wet cleaning member 310 may receive the cleaning fluid at a threshold flowrate $Q_1$ that allows the fluid wall 418 (FIG. 6E) to reach a height sufficient to contact the nozzles of the print head 150 (FIG. 1). If the flowrate is too low, the fluid wall 418 (FIG. 6E) may not contact the nozzles of the print head 150 (FIG. 1). If the flowrate is too high, the fluid wall 418 (FIG. 6E) may get cleaning fluid too high into the nozzles of the print head 150 (FIG. 1), which could lead to cross-contamination between binder material and cleaning fluid in the build operation or clogged nozzles. Based on the selected speed of the pump (and corresponding pressure), the needle valves within the wet cleaning member pathway (e.g., 905 and 915) may be adjusted such that the flowrate is equivalent to the threshold flowrate $Q_1$, as measured by a flow sensor 921. In some embodiments, the flow sensor 921 may transmit a signal to a user interface device alerting a user of the flowrate measured by the flow sensor 921.

In some embodiments, the wet cleaning member pathway may be the first pathway to be calibrated to secure the threshold flowrate $Q_1$ such that the other pathways (e.g., the cleaning station fill pathway, the cleaning fluid recirculation pathway, and the cleaning station drain pathway) may be able to operate with the same flowrate as the wet cleaning member pathway. In some embodiments where the wet cleaning member pathway is the first pathway, needle valves 905 and 915 may be adjusted in order to achieve the threshold flowrate $Q_1$ that is sufficient to maintain the desired height of the fluid wall 418 (FIG. 6E) of the cleaning fluid in the wet cleaning member 310. Once $Q_1$ is reached, the actuating valve 982 may close and the calibration of the remaining pathways may begin, following a similar procedure.

Referring again to FIG. 9, an example method 1000 of calibrating the cleaning fluid circuit 920 of the fluid management system 900 is depicted. At block 1002, a speed is selected for the single pump 820 in the cleaning fluid circuit 920. Then, at block 1004, cleaning fluid is pumped into the print head fill pathway as the first pathway (e.g. the wet cleaning member pathway).

At block 1006, the needle valves 905 and 915 are adjusted to change the resistance of the first pathway. A flow sensor 921 may provide a flowrate of the cleaning fluid in the first pathway. At block 1008, a determination is made regarding whether the flowrate has reached a threshold flowrate $Q_1$. As discussed herein, the threshold flowrate $Q_1$ is the flowrate sufficient to reach a height to contact the nozzles of the print head 150 (FIG. 1). If the flowrate is not substantially the same as a threshold flowrate $Q_1$, block 1006 is repeated. At block 1010, once a threshold flowrate $Q_1$ is reached, the cleaning fluid stops being pumped into the first pathway, and the actuating valve 982 closes. The threshold flowrate $Q_1$ may be reached after the flowrate remains substantially the same for a period of time. For example, the flowrate may remain substantially the same for longer than at least three seconds.

At block 1012, the cleaning fluid is pumped into the subsequent pathway (e.g., the cleaning fluid recirculation pathway). For example, if the subsequent pathway is the cleaning fluid recirculation pathway, actuating valve 990 opens. At block 1014, the needle valve 955 may be adjusted based on the flow rate indicated by the flow sensor 921. At block 1016, a determination is made regarding whether the flowrate $Q_N$ in the subsequent pathway is substantially the same as that of $Q_1$. If the flowrate $Q_N$ is not substantially the same as $Q_1$, block 1014 may be repeated. At block 1018, once flowrate $Q_N$ is substantially the same as $Q_1$, the cleaning fluid stops being pumped into the pathway. At block 1020, depending on how many other pathways there are in the system that have yet to be calibrated, the calibration process may be repeated, starting at block 1012. Once all pathways (e.g., the cleaning station fill pathway, the cleaning fluid recirculation pathway, and the cleaning station drain pathway) have $Q_N$ is substantially the same as $Q_1$, the calibration process is complete at block 1022.

It is contemplated that the method 1000 of FIG. 9 may also be utilized to detect a clog in the fluid management system 900. For example, if a flowrate ($Q_N$) of the fluid within any of the plurality of fluid pathways is not substantially the same as $Q_1$ after more than a threshold period of time that is longer than the average time to stabilize flow, the user interface may display an alert to instruct a user to manually inspect the clogs. Inspecting for clogs may include a visual examination, isolation of the pathway where a clog is suspected, and the use of non-destructive testing (NDT), such as ultrasonic testing, to identify the location and nature of the clog without damaging the pipe.

In some embodiments, the flowrates read by the flow sensors 821 and 921 may be sent to the control system 200 (FIG. 3). Referring again to FIG. 3, in some embodiments, the control system 200 may include a processor 202 communicatively coupled to a memory 204. The processor 202 may include any processing component(s), such as a central processing unit or the like, configured to receive and execute computer readable and executable instructions stored in, for example, the memory 204. In the embodiments described herein, the processor 202 of the control system 200 is configured to provide control signals to the pump 808 (FIG. 7) and the pump 820 (FIG. 8).

In some embodiments, the control system 200 may be configured to receive signals from one or more sensors of the fluid management system 900 and, based on these signals, control the pump 808 (FIG. 7), the pump 820 (FIG. 8), or other valves and drains that may be included in the fluid management system. In addition, it is contemplated that, although control system 200 is shown in FIG. 3 as being a single computing device, the control system 200 may be a distributed system that includes a plurality of computing devices interconnected to perform the functions herein.

In the embodiments described herein, the computer readable and executable instructions for controlling the additive manufacturing apparatus 100 (FIG. 1), and particularly, the cleaning station 110 (FIG. 4) and the fluid management system 900, are stored in the memory 204 of the control system 200. The memory 204 is a non-transitory computer readable memory. The memory 204 may be configured as, for example and without limitation, volatile and/or nonvolatile memory and, as such, may include random access memory (including SRAM, DRAM, and/or other types of random access memory), flash memory, registers, compact discs (CD), digital versatile discs (DVD), and/or other types of storage components.

Examples

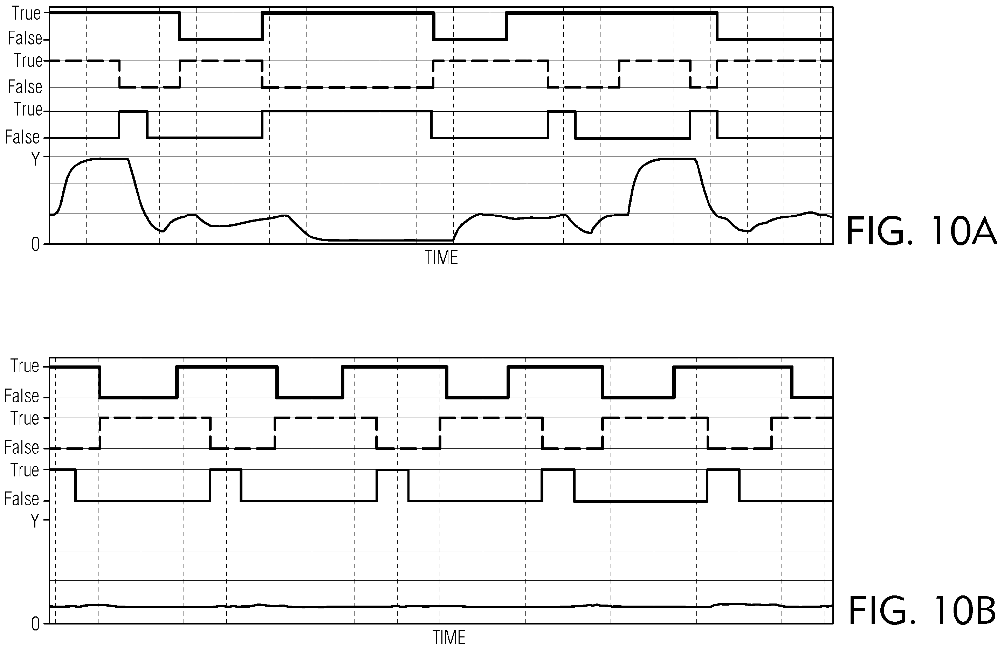

FIGS. 10A-10B provide examples of the flowrate within a fluid management system both before and after the calibration method 1000 is performed. In the graph of FIGS. 10A and 10B, cleaning fluid is pumped into a cleaning fluid circuit (e.g., cleaning fluid circuit 920) with a single pump. The flowrate is depicted on the y-axis over time on the x-axis. Above the flowrate, various pathways are seen as being active or inactive, where active is equal to "true" and inactive is equal to "false."

As can be seen in the graph of FIG. 10A, the flowrate of the cleaning fluid in each pathway varies depending on which pathway is active, and the flowrate varies within the pathway that is active. FIG. 10B depicts the same system as FIG. 10A but with the calibration process described herein performed before activating various pathways during a build. In the graph of FIG. 10B, the pathways are activated or deactivated, and the flowrate is shown to remain relatively stable within each pathway and across various pathways. The same scale of the y-axis and x-axis is depicted in both graphs A and B. As shown, the calibration system helps stabilize the flowrate not only within the pathways but across a plurality of pathways.

In view of the above, it should now be understood that embodiments of the present disclosure are directed toward a fluid management system. The fluid management system includes a pump and a plurality of fluid pathways, each of the plurality of fluid pathways including a needle valve. At least a portion of each of the plurality of fluid pathways are fluidly connected. The use of a single pump to provide or drain fluid from a plurality of fluid pathways provides advantages over the prior art such as design efficiency, improved process efficacy, and better stabilization. Specifically, the limited space within additive manufacturing systems benefits from single pump connected to each fluid pathway. Additionally, adjusting the fluid pathways with needle valves to reduce or increase the flowrate through each pathway allows the use of a single pump allows for a process with uniform flowrates and shorter times to reach stabilization, resulting in increased efficacy.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Further aspects are provided by the subject matter of the following clauses:

A fluid management system, within an additive manufacturing system, the fluid management system comprising: an additive manufacturing apparatus; at least one fluid circuit, each fluid circuit comprising a plurality of fluid pathways, each of the plurality of fluid pathways comprising at least one flow-regulating valve and at least one actuating valve; and a pump, wherein: at least a portion of each of the plurality of fluid pathways are fluidly connected to the pump; the pump is operable to provide a fluid to each of the plurality of fluid pathways, wherein the fluid has a flowrate within each of the plurality of fluid pathways; and each flow-regulating valve is adjustable to increase or decrease the flowrate of a corresponding fluid pathway such that flowrates of the fluid within each of the plurality of fluid pathways are substantially the same.

The fluid management system of any preceding clause, wherein the fluid is a cleaning fluid.

The fluid management system of the preceding clause, wherein the plurality of fluid pathways are fluidly coupled to a cleaning station, the cleaning station comprising a wet cleaning member comprising a fluid channel containing a volume of the cleaning fluid therein.

The fluid management system of the preceding clause, wherein a wet cleaning member pathway is fluidly coupled to the wet cleaning member by a cleaning manifold and a cleaning fluid reservoir such that the cleaning manifold receives the cleaning fluid from the cleaning fluid reservoir through the wet cleaning member pathway and supplies the cleaning fluid to the fluid channel.

The fluid management system of the third clause, wherein a wet cleaning member pathway is fluidly coupled to the wet cleaning member by a cleaning manifold and a cleaning fluid reservoir such that the cleaning manifold receives the cleaning fluid from the cleaning fluid reservoir through the wet cleaning member pathway and supplies the cleaning fluid to the fluid channel.

The fluid management system of the third clause, wherein a cleaning station fill pathway is fluidly coupled to the cleaning station and a cleaning fluid reservoir such that the cleaning station receives cleaning fluid from the cleaning fluid reservoir through the cleaning station fill pathway, wherein the cleaning station comprises one or more of: a purge wiper section; a wet cleaner section; a spit capture tray; a capping section.

The fluid management system of the first clause, wherein the fluid is a binder material.

The fluid management system of the preceding clause, wherein the plurality of fluid pathways are fluidly coupled to the additive manufacturing apparatus, the additive manufacturing apparatus comprising a print head manifold fluidly coupled to a print head, the print head manifold containing a volume of the binder material therein.

The fluid management system of the preceding clause, wherein a print head fill pathway is fluidly coupled to the print head manifold such that the print head manifold receives the binder material from the print head fill pathway and supplies the binder material to the print head.

The fluid management system of the eighth clause, wherein a binder material return pathway is fluidly coupled to an active drain of the additive manufacturing apparatus and a binder material reservoir such that the binder material reservoir receives binder material from the active drain of the additive manufacturing apparatus through the binder material return pathway.

The fluid management system of the first clause, wherein the at least one flow-regulating valve includes a needle valve.

A method of fluid management in an additive manufacturing system, the method comprising: pumping a fluid into at least one fluid circuit, each fluid circuit comprising a plurality of fluid pathways, each of the plurality of fluid pathways comprising at least one flow-regulating valve and at least one actuating valve, wherein the at least one fluid circuit is fluidly coupled to an additive manufacturing apparatus or a cleaning station; adjusting the at least one flow-regulating valve within a first pathway until a threshold flowrate in the first pathway is maintained; stopping, with the at least one actuating valve within the first pathway, a flow of the fluid in the first pathway; and calibrating flowrates of remaining fluid pathways of the plurality of fluid pathways in an iterative manner, the calibrating comprising: (I) pumping the fluid into a subsequent pathway, (II) adjusting a flow-regulating valve within the subsequent pathway until a flowrate of the fluid in the subsequent pathway is substantially the same as the threshold flowrate, (III) stopping a flow of the fluid in the subsequent pathway, and (IV) repeating (I) to (III) until each of the plurality of fluid pathways of the plurality of fluid pathways has a flowrate substantially the same as the threshold flowrate.

The method of the preceding clause, wherein the fluid is a cleaning fluid.

The method of the preceding clause, further comprising directing the cleaning fluid to the first pathway comprising a wet cleaning member within a cleaning station of the additive manufacturing system, wherein the wet cleaning member comprises a fluid wall.

The method of preceding clause, further comprising directing the cleaning fluid through a cleaning manifold of the wet cleaning member to the fluid wall, wherein the threshold flowrate in the first pathway corresponds to a flowrate that allows the fluid wall to reach a height sufficient to contact a print head.

The method of the twelfth clause, wherein the fluid is a binder material.

The method of the preceding clause, further comprising directing the binder material to the first pathway comprising a print head manifold coupled to a print head of an additive manufacturing apparatus of the additive manufacturing system, wherein the print head is operable to deposit the binder material within the additive manufacturing apparatus.

The method of the preceding clause, further comprising directing the binder material through the print head manifold to the print head, wherein the threshold flowrate in the first pathway is sufficient to maintain a supply of the binder material in the print head manifold while the additive manufacturing apparatus is printing such that the print head deposits the binder material.

The method of any preceding clause, wherein pumping the fluid comprises instructing a pump to pump the fluid.

The method of any preceding clause, further comprising, after (I), monitoring the flowrate of the fluid and completing (II) when the flowrate of the subsequent pathway is substantially maintained for at least three seconds.

A method of detecting a clog in any one fluid pathway of a plurality of fluid pathways within an additive manufacturing system, the method comprising: pumping a fluid into at least one fluid circuit, each fluid circuit comprising the plurality of fluid pathways, each of the plurality of fluid pathways comprising at least one flow-regulating valve and at least one actuating valve, wherein the at least one fluid circuit is fluidly coupled to an additive manufacturing apparatus or a cleaning station; adjusting a flow-regulating valve within a first pathway until a threshold flowrate in the first pathway is maintained; stopping a flow of the fluid in the first pathway with the at least one actuating valve within the first pathway; calibrating flowrates of remaining fluid pathways of the plurality of fluid pathways in an iterative manner; determining if a flowrate of the fluid within any one of the plurality of fluid pathways is not substantially the same as the threshold flowrate after a threshold period of time; and inspecting for clogs any of the plurality of fluid pathways when the flowrate of the fluid is not substantially the same to the threshold flowrate.

**Claims**

1.  A fluid management system (900) within an additive manufacturing system, the fluid management system (900) comprising:

an additive manufacturing apparatus (100);

at least one fluid circuit, each fluid circuit comprising a plurality of fluid pathways, each of the plurality of fluid pathways comprising at least one flow-regulating valve (835, 845, 855, 865, 875, 905, 915, 925, 935, 945, 955) and at least one actuating valve (880, 882, 884, 886, 890, 980, 982, 984, 986, 988, 990); and

a pump (808, 820),

wherein:

at least a portion of each of the plurality of fluid pathways are fluidly connected to the pump (808, 820);

the pump (808, 820) is operable to provide a fluid to each of the plurality of fluid pathways, wherein the fluid has a flowrate within each of the plurality of fluid pathways; and

each flow-regulating valve (835, 845, 855, 865, 875, 905, 915, 925, 935, 945, 955) is adjustable to increase or decrease the flowrate of each of a corresponding fluid pathway such that flowrates of the fluid within each of the plurality of fluid pathways are substantially the same.

2. The fluid management system (900) of claim 1, wherein the fluid is a cleaning fluid and wherein the plurality of fluid pathways are fluidly coupled to a cleaning station (110), the cleaning station (110) comprising a wet cleaning member (310) comprising a fluid channel (408) containing a volume of the cleaning fluid therein.

3. The fluid management system (900) of claim 2, wherein a wet cleaning member pathway is fluidly coupled to the wet cleaning member (310) by a cleaning manifold (414) and a cleaning fluid reservoir (816) such that the cleaning manifold (414) receives the cleaning fluid from the cleaning fluid reservoir (816) through the wet cleaning member pathway and supplies the cleaning fluid to the fluid channel (408).

4. The fluid management system (900) of claim 3, wherein a cleaning station fill pathway is fluidly coupled to the cleaning station (110) and the cleaning fluid reservoir (816) such that the cleaning station (110) receives cleaning fluid from the cleaning fluid reservoir (816) through the cleaning station fill pathway, wherein the cleaning station (110) comprises one or more of:

a purge wiper section (303);

a wet cleaner section (304);

a spit capture tray (307);

a capping section (308).

5. The fluid management system (900) of claim 3, wherein the cleaning fluid drain pathway is fluidly coupled to a main drain (320) of the cleaning station (110) and the cleaning fluid reservoir (816) such that the cleaning fluid reservoir (816) receives cleaning fluid from the main drain (320) of the cleaning station (110) through the cleaning fluid drain pathway.

6. The fluid management system (900) of claim 1, wherein the fluid is a binder material and wherein the plurality of fluid pathways are fluidly coupled to the additive manufacturing apparatus (100), the additive manufacturing apparatus (100) comprising a print head manifold (804) fluidly coupled to a print head (150), the print head manifold (804) containing a volume of the binder material therein.

7. The fluid management system (900) of claim 6, wherein a print head fill pathway is fluidly coupled to the print head manifold (804) such that the print head manifold (804) receives the binder material from the print head fill pathway and supplies the binder material to the print head (150).

8. The fluid management system (900) of claim 7, wherein a binder material return pathway is fluidly coupled to an active drain (806) of the additive manufacturing apparatus (100) and a binder material reservoir (802) such that the binder material reservoir (802) receives binder material from the active drain (806) of the additive manufacturing apparatus (100) through the binder material return pathway.

9. The fluid management system (900) of claim 1, wherein the at least one flow-regulating valve includes a needle valve.

10. A method of fluid management in an additive manufacturing system, the method comprising:

pumping a fluid into at least one fluid circuit, each fluid circuit comprising a plurality of fluid pathways, each of the plurality of fluid pathways comprising at least one flow-regulating valve (835, 845, 855, 865, 875, 905, 915, 925, 935, 945, 955) and at least one actuating valve (880, 882, 884, 886, 890, 980, 982, 984, 986, 988, 990), wherein the at least one fluid circuit is fluidly coupled to an additive manufacturing apparatus (100) or a cleaning station (110);

adjusting the at least one flow-regulating valve (835, 845, 855, 865, 875, 905, 915, 925, 935, 945, 955) within the first pathway until a threshold flowrate in the first pathway is maintained;

stopping, with the at least one actuating valve (880, 882, 884, 886, 890, 980, 982, 984, 986, 988, 990) within the first pathway, a flow of the fluid in the first pathway; and

calibrating flowrates of remaining fluid pathways of the plurality of fluid pathways in an iterative manner, the calibrating comprising:

(I) pumping the fluid into a subsequent pathway,
(II) adjusting a flow-regulating valve (835, 845, 855, 865, 875, 905, 915, 925, 935, 945, 955) within the subsequent pathway until a flowrate of the fluid in the subsequent pathway is substantially the same as the threshold flowrate
(III) stopping a flow of the fluid in the subsequent pathway, and
(IV) repeating (I) to (III) until each of the plurality of fluid pathways of the plurality of fluid pathways has a flowrate substantially the same as the threshold flowrate.

11. The method of claim 10, wherein the fluid is a cleaning fluid.

12. The method of claim 11, further comprising directing the cleaning fluid to the first pathway comprising a wet cleaning member (310) within a cleaning station (110) of an additive manufacturing system, wherein the wet cleaning member (310) comprises a fluid wall (418).

13. The method of claim 12, further comprising directing the cleaning fluid through a cleaning manifold (414) of the wet cleaning member (310) to the fluid wall (418), wherein the threshold flowrate in the first pathway corresponds to a flowrate that allows the fluid wall (418) to reach a height sufficient to contact a print head (150).

14. The method of claim 6, wherein the fluid is a binder material.

15. The method of claim 10, further comprising directing the binder material to the first pathway comprising a print head manifold (804) coupled to a print head (150) of an additive manufacturing apparatus (100), wherein the print head (150) is operable to deposit the binder material within the additive manufacturing apparatus (100).

FIG. 1

EP 4 659 935 A1

FIG. 2A

EP 4 659 935 A1

FIG. 2B

FIG.3

EP 4 659 935 A1

FIG. 4

FIG. 5A

EP 4 659 935 A1

FIG. 5B

EP 4 659 935 A1

FIG. 5C

EP 4 659 935 A1

FIG. 6A

FIG. 6B

310

406

402

408

401

414

404

FIG. 6C

FIG. 6D

EP 4 659 935 A1

FIG. 6E

FIG. 7

900

950

802

R$_5$  865  886

806  R$_4$  855  884

804  845  882  R$_3$

888

R$_1$  835  880

808

R$_2$  891  810  821

890  875  R$_6$

FIG. 8

1000

1002 — Select pump speed

1004 — Open valves and pump fluid into first pathway

1006 — Adjust needle valve of first pathway

1008 — Q_1 Reached?

NO

YES

1010 — Close valves and stop pumping in first pathway

YES

1012 — Open valves to next pathway and pump

1014 — Adjust needle valve in next pathway N

1016 — $Q_N = Q_1$?

NO

YES

1018 — Close valves to next pathway and stop pump

1020 — Remaining pathways ?

NO

1022 — END

FIG. 9

FIG. 10A

FIG. 10B

Europäisches
Patentamt

European
Patent Office

Office européen
des brevets

# EUROPEAN SEARCH REPORT

Application Number

EP 25 17 4183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 221 073 B1 (RENISHAW PLC [GB]) 22 April 2020 (2020-04-22) | 1,9 | INV. B29C64/112 B22F10/14 |
| A | * paragraph [0016] - paragraph [0049]; claims 1-12; figures 1-5 * | 2-8, 10-15 | B29C64/165 B29C64/35 |
| | ----- | | B29C64/393 |
| A | US 2022/118681 A1 (SEXTON ANDREW [AU] ET AL) 21 April 2022 (2022-04-21) * paragraph [0125] - paragraph [0223]; claims 1-22; figures 1-27 * | 1-15 | B33Y10/00 B33Y30/00 B33Y50/02 B08B3/04 |
| | ----- | | B41J2/165 |
| A | US 2018/243980 A1 (ERB RANDALL MORGAN [US] ET AL) 30 August 2018 (2018-08-30) * paragraph [0086] - paragraph [0113]; claims 1-21; figures 1-11 * | 1-15 | B41J2/175 |
| | ----- | | |

TECHNICAL FIELDS
SEARCHED      (IPC)

B29C
C22C
B22F
B33Y
B41J

The present search report has been drawn up for all claims

| Place of search | Date of completion of the search | Examiner |
|---|---|---|
| The Hague | 28 October 2025 | Lang, Xavier |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................................

& : member of the same patent family, corresponding
   document

EPO FORM 1503 03.82 (P04C01)

2

## ANNEX TO THE EUROPEAN SEARCH REPORT
## ON EUROPEAN PATENT APPLICATION NO.

EP 25 17 4183

This annex lists the patent family members relating to the patent documents cited in  the above-mentioned European search report.
The members are as contained in the European Patent Office EDP file on
The European Patent Office is in no way liable for these particulars which are merely given for the purpose of information.

28-10-2025

| Patent document cited in search report | | Publication date | Patent family member(s) | | Publication date |
|---|---|---|---|---|---|
| EP 3221073 | B1 | 22-04-2020 | CN | 107107193 A | 29-08-2017 |
| | | | EP | 3221073 A2 | 27-09-2017 |
| | | | JP | 2017538038 A | 21-12-2017 |
| | | | US | 2018244034 A1 | 30-08-2018 |
| | | | WO | 2016079494 A2 | 26-05-2016 |
| US 2022118681 | A1 | 21-04-2022 | AU | 2019393336 A1 | 17-06-2021 |
| | | | CA | 3122120 A1 | 11-06-2020 |
| | | | CN | 113165374 A | 23-07-2021 |
| | | | EP | 3863852 A1 | 18-08-2021 |
| | | | JP | 2022511527 A | 31-01-2022 |
| | | | KR | 20210099013 A | 11-08-2021 |
| | | | SG | 11202104884R A | 29-06-2021 |
| | | | US | 2022118681 A1 | 21-04-2022 |
| | | | WO | 2020113280 A1 | 11-06-2020 |
| US 2018243980 | A1 | 30-08-2018 | NONE | | |

EPO FORM P0459

For more details about this annex : see Official Journal of the European Patent Office, No. 12/82

**REFERENCES CITED IN THE DESCRIPTION**

**Patent documents cited in the description**

- US 20180071820 A